# EUROPEAN PATENT APPLICATION

(11) **EP 4 391 608 A1**
(43) Date of publication of application: **26.06.2024**
(21) Application number: 22863504.1
(22) Date of filing: 31.08.2022
(51) Int. Cl.: H04W 4/50

(54) **METHOD FOR SELECTING NETWORK ELEMENT IN COMMUNICATION SENSING SERVICE, COMMUNICATION DEVICE, AND COMMUNICATION SYSTEM**

(30) Priority: 01.09.2021 CN 202111023165
(71) Applicant: Huawei Technologies Co., Ltd., Shenzhen, Guangdong 518129 (CN)
(72) Inventor: YING, Jiangwei, Shenzhen, Guangdong 518129 (CN); YANG, Yanmei, Shenzhen, Guangdong 518129 (CN); ZHANG, Wanqiang, Shenzhen, Guangdong 518129 (CN)
(74) Representative: Maiwald GmbH
(86) International application number: PCT/CN2022/116101
(87) International publication number: WO 2023/030369

(57) **Abstract**

This application provides a method for selecting a network element in a communication sensing service and a communication apparatus. In the method, a RAN network element, an AMF network element, and a sensing network element each having a sensing capability can register the sensing capability with an NRF network element. After receiving a sensing service request, an NEF network element, the AMF network element, or the sensing network element selects an appropriate network element based on the sensing capability of each network element (for example, the RAN network element, the AMF network element, or the sensing network element) registered with the NRF network element, to select the appropriate network element for a sensing service, to support the sensing service in an end-to-end manner.

## Description

This application claims priority to Chinese Patent Application No. 202111023165.7, filed with the China National Intellectual Property Administration on September 1, 2021 and entitled "METHOD FOR SELECTING NETWORK ELEMENT IN COMMUNICATION SENSING SERVICE, COMMUNICATION APPARATUS, AND COMMUNICATION SYSTEM", which is incorporated herein by reference in its entirety.

### TECHNICAL FIELD

This application relates to the communication sensing field, and more specifically, to a method for selecting a network element in a communication sensing service, a communication apparatus, and a communication system.

### BACKGROUND

With the evolution of communication technologies, a sensing capability is derived from a communication frequency band, especially a millimeter-wave frequency band. When a radio access network (radio access network, RAN) network element or a terminal device has a sensing capability, sensing and identification may be performed on a specific area, a specific object, a specific event, or the like. A communication network has advantages such as wide coverage, long-distance coverage, large bandwidth, high precision, and low delay, so that the communication network can have an ultra-high sensing capability, which exceeds a sensing capability of an existing radar. If the communication network uses this sensing capability as a new capability, sensing requirements in many scenarios can be met.

However, network elements in the communication network have different capabilities. For example, some network elements may have sensing capabilities (that is, support sensing features) or may not have sensing capabilities. Even the network elements having the sensing capabilities have limitations on sensing ranges of the network elements. Different network elements have corresponding sensing service scopes.

Therefore, after a communication system receives a request of a sensing service, how to select an appropriate network element to support the sensing service in an end-to-end manner is still a problem.

### SUMMARY

This application provides a method for selecting a network element in a communication sensing service and a communication apparatus, so that an appropriate network element can be selected to support a sensing service in an end-to-end manner.

According to a first aspect, a method for selecting a network element in a communication sensing service is provided. The method includes:
An NEF network element receives a first sensing service request message from an application function network element, where the first sensing service request message is used to request a first sensing service.

The NEF network element sends a second sensing service request message to a target first network element, where the second sensing service request message is used to request the first sensing service, and the target first network element supports the first sensing service.

With reference to the first aspect, in some implementations of the first aspect, before the NEF network element sends a second sensing service request message to a target first network element, the method further includes:

The NEF network element selects the target first network element.

With reference to the first aspect, in some implementations of the first aspect, that the NEF network element selects the target first network element includes:
The NEF network element sends a network element discovery request message to an NRF network element, where the network element discovery request message is used to request to obtain a first network element that supports the first sensing service.

The NEF network element receives a response message of the network element discovery request message, where the response message indicates one or more first network elements that support the first sensing service.

The NEF network element selects the target first network element from the one or more first network elements.

With reference to the first aspect, in some implementations of the first aspect, the network element discovery request message includes network element type information and area information, where the network element type information indicates a first network element type, and the area information indicates a sensing area; or the network element discovery request message includes network element type information and information about UE, where the network element type information indicates a first network element type.

With reference to the first aspect, in some implementations of the first aspect, the network element discovery request message further includes one or more of the following:
sensing indication information, a sensing distance, the sensing area, a sensing speed range, a sensing distance resolution, sensing angle measurement precision, a sensing speed resolution, a sensing quality of service QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a RAN network element type, an access type, and a RAT type.

The sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the RAN network element type, the access type, and the RAT type are determined based on the first sensing service request message.

The sensing indication information indicates that a network element requested by the network element discovery request message is used to sense a service.

With reference to the first aspect, in some implementations of the first aspect, the first network element is an AMF network element, and the target first network element is a target AMF network element; or the first network element is an SF network element, and the target first network element is a target SF network element.

With reference to the first aspect, in some implementations of the first aspect, the first network element is the SF network element, the target first network element is the target SF network element, and the information about the UE is location information of the UE and/or an identifier of a serving AMF of the UE.

The location information of the UE is obtained by the NEF network element from the first sensing service request message, or is obtained by the NEF network element from a GMLC network element, or is obtained by the NEF network element from the AMF network element.

With reference to the first aspect, in some implementations of the first aspect, the first network element is the SF network element, the target first network element is the target SF network element, and the second sensing service request message includes the identifier of the serving AMF network element of the UE and/or the location information of the UE.

According to a second aspect, a method for selecting a network element in a communication sensing service is provided. The method includes:
An SF network element receives a first sensing service request message from a first network element, where the first sensing service request message is used to request a first sensing service.

The SF network element selects a target second network element that supports the first sensing service.

The SF sends a first sensing control request message to the target second network element, where the first sensing control request message is used to control a RAN network element to perform a sensing operation on the first sensing service.

With reference to the second aspect, in some implementations of the second aspect, the first network element is an NEF network element, an AMF network element, an application function AF network element, an application server AS, or a gateway sensing center.

With reference to the second aspect, in some implementations of the second aspect, the target second network element is the AMF network element or the radio access network device or the RAN network element.

With reference to the second aspect, in some implementations of the second aspect, that the SF network element selects a target second network element that supports the first sensing service includes:
The SF network element sends a network element discovery request message to an NRF network element, where the network element discovery request message is used to request to obtain a second network element that supports the first sensing service.

The SF network element receives a response message from the NRF network element, where the response message indicates one or more second network elements that support the first sensing service.

The SF network element selects the target second network element from the one or more second network elements.

With reference to the second aspect, in some implementations of the second aspect, the network element discovery request message includes network element type information and area information, where the network element type information indicates a second network element type, and the area information indicates a sensing area; or the network element discovery request message includes network element type information and information about UE, where the network element type information indicates a second network element type.

With reference to the second aspect, in some implementations of the second aspect, the information about the UE includes location information of the UE, and the location information of the UE is obtained by the SF network element from the first sensing service request message, or is obtained by the SF network element from the AMF network element, or is obtained by the SF network element from a GMLC network element.

With reference to the second aspect, in some implementations of the second aspect, the network element discovery request message further includes one or more of the following information:
sensing indication information, a sensing distance, a sensing speed range, a sensing distance resolution, sensing angle measurement precision, a sensing speed resolution, a sensing quality of service QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a RAN network element type, an access type, and a RAT type.

The sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the RAN network element type, the access type, and the RAT type are determined based on the first sensing service request message.

The sensing indication information indicates that a network element requested by the network element discovery request message is used to sense a service.

With reference to the second aspect, in some implementations of the second aspect, the method further includes:
The SF network element sends a sensing capability registration request message to the NRF network element, where the sensing capability registration request message is used to request to register a sensing capability of the SF network element with the NRF network element.

With reference to the second aspect, in some implementations of the second aspect, the method further includes:
The SF network element receives a sensing capability of one or more RAN network elements that is reported by the one or more RAN network elements; or the SF network element receives a sensing capability of one or more AMF network elements that is reported by the one or more AMF network elements.

The SF network element obtains the sensing capability of the SF network element based on the sensing capability of the one or more RAN network elements or based on the sensing capability of the one or more AMF network elements.

With reference to the second aspect, in some implementations of the second aspect, the sensing capability registration request message includes one or more of the following:
the sensing distance, the sensing area, the sensing speed range, the sensing distance resolution, the sensing angle measurement precision, the sensing speed resolution, the sensing quality of service QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the RAN network element type, the access type, and the RAT type.

With reference to the second aspect, in some implementations of the second aspect, the first sensing service request message is used to request the first sensing service for the UE, and the method further includes:

The SF network element sends a second request message to a UDM network element, where the second request message is used to request to obtain a serving AMF of the UE.

The SF network element receives a response message from the UDM network element, where the response message includes an identifier of the serving AMF of the UE.

With reference to the second aspect, in some implementations of the second aspect, the first sensing service request message does not include the identifier of the serving AMF of the UE.

According to a third aspect, a method for selecting a network element in a communication sensing service is provided. The method includes: An AMF network element receives a first sensing service request message, where the first sensing service request message is used to request a first sensing service.

The AMF network element selects a first SF network element that supports the first sensing service.

The AMF network element sends a second sensing service request message to the first SF network element, where the second sensing service request message is used to request the first sensing service.

With reference to the third aspect, in some implementations of the third aspect, that the AMF network element selects a first SF network element that supports the first sensing service includes:

The AMF network element sends an SF network element discovery request message to an NRF network element, where the SF network element discovery request message is used to request to obtain an SF network element that supports the first sensing service.

The AMF network element receives a response message from the NRF network element, where the response message includes one or more SF network elements that support the first sensing service.

The AMF network element selects the first SF network element from the one or more SF network elements.

With reference to the third aspect, in some implementations of the third aspect, the SF network element discovery request message includes network element type information and information about UE, and the network element type information indicates a third network element type.

Alternatively, the SF network element discovery request message includes network element type information and area information, the network element type information indicates a third network element type, and the area information indicates a sensing area.

With reference to the third aspect, in some implementations of the third aspect, the SF network element discovery request message further includes one or more of the following information:
sensing indication information, a sensing distance, a sensing speed range, a sensing distance resolution, sensing angle measurement precision, a sensing speed resolution, a sensing quality of service QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a RAN network element type, an access type, and a RAT type.

The sensing distance, the sensing area, the sensing speed range, the sensing distance resolution, the sensing angle measurement precision, the sensing speed resolution, the sensing quality of service QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the RAN network element type, the access type, and the RAT type are determined based on the first sensing service request message.

The sensing indication information indicates that a network element requested by the network element discovery request message is used to sense a service.

With reference to the third aspect, in some implementations of the third aspect, the information about the UE is an identifier of a serving AMF network element of the UE and/or location information of the UE.

The location information of the UE is obtained by the AMF network element from the first sensing service request message or a location management function LMF network element.

With reference to the third aspect, in some implementations of the third aspect, the method further includes:
The AMF function network element receives a first sensing control request message from the first SF network element, where the first sensing control request message is used to control a first RAN network element to perform a sensing operation on the first sensing service.

With reference to the third aspect, in some implementations of the third aspect, the method further includes:

The AMF function network element sends a second sensing control request message to the first RAN network element, where the second sensing control request message is used to control the first RAN network element to perform the sensing operation on the first sensing service.

With reference to the third aspect, in some implementations of the third aspect, the method further includes:

The AMF network element sends a sensing capability registration request message to the NRF network element, where the sensing capability registration request message is used to request to register a sensing capability of the AMF network element with the NRF network element.

With reference to the third aspect, in some implementations of the third aspect, the method further includes:

The AMF network element receives a sensing capability of one or more RAN network elements that is reported by the one or more RAN network elements.

The AMF network element obtains the sensing capability of the AMF network element based on the sensing capability of the one or more RAN network elements.

With reference to the third aspect, in some implementations of the third aspect, the sensing capability registration request message further includes one or more of the following information:
the sensing distance, the sensing area, the sensing speed range, the sensing distance resolution, the sensing angle measurement precision, the sensing speed resolution, the sensing quality of service QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the RAN network element type, the access type, and the RAT type.

With reference to the third aspect, in some implementations of the third aspect, the first sensing service request message is from an NEF network element, the UE, an AF, an AS, or a gateway sensing center.

According to a fourth aspect, a method for selecting a network element in a communication sensing service is provided. The method includes:
A RAN network element obtains a sensing capability of the RAN network element.

The RAN network element registers the sensing capability of the RAN network element with an NRF network element; or the RAN network element reports the sensing capability of the RAN network element.

With reference to the fourth aspect, in some implementations of the fourth aspect, that the RAN network element reports the sensing capability of the RAN network element includes:

The RAN network element reports the sensing capability of the RAN network element to an AMF network element.

Alternatively, the RAN network element reports the sensing capability of the RAN network element to an SF network element.

With reference to the fourth aspect, in some implementations of the fourth aspect, that the RAN network element registers the sensing capability of the RAN network element with an NRF network element includes:

The RAN network element sends a sensing capability registration request message to the NRF network element, where the sensing capability registration request message is used to request to register the sensing capability of the RAN network element with the NRF network element.

With reference to the fourth aspect, in some implementations of the fourth aspect, the sensing capability of the RAN network element includes one or more of the following:
a sensing distance, a sensing area, a sensing speed range, a sensing distance resolution, sensing angle measurement precision, a sensing speed resolution, a QoS requirement, sensing object identification accuracy, a false alarm rate of sensing object identification, sensing data precision, a sensing data update frequency, a sensing dimension, a sensing feedback manner, and a service type.

According to a fifth aspect, a method for selecting a network element in a communication sensing service is provided. The method includes:
An NRF network element receives a sensing capability registration request message from a third network element, where the sensing capability registration request message is used to request to register a sensing capability of the third network element with the NRF network element. The third network element is one or more of a RAN network element, an AMF network element, and an SF network element.

The NRF network element stores the sensing capability of the third network element.

With reference to the fifth aspect, in some implementations of the fifth aspect, the sensing capability registration message includes one or more of the following:
a sensing distance, a sensing area, a sensing speed range, a sensing distance resolution, sensing angle measurement precision, a sensing speed resolution, a sensing quality of service QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a RAN network element type, an access type, and a RAT type.

With reference to the fifth aspect, in some implementations of the fifth aspect, the method further includes:
The NRF network element receives a network element discovery request message from a fourth network element, where the network element discovery request message is used to request to obtain the third network element that supports a first sensing service, the network element discovery request message includes network element type information, and the network element type information indicates a third network element type.

The NRF network element returns a response message of the network element discovery request message to the fourth network element based on the stored sensing capability of the third network element and the network element discovery request message, where the response message indicates an identifier of one or more third network elements that support the first sensing service.

When the fourth network element is an NEF network element, the third network element is an AMF network element or an SF network element.

When the fourth network element is an AMF network element, the third network element is a RAN network element or an SF network element.

When the fourth network element is an SF network element, the third network element is an AMF network element or a RAN network element.

With reference to the fifth aspect, in some implementations of the fifth aspect, the network element discovery request message includes one or more of the following information:
sensing indication information, the sensing distance, the sensing area, the sensing speed range, the sensing distance resolution, sensing angle measurement precision, the sensing speed resolution, the sensing quality of service QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the RAN network element type, the access type, and the RAT type, where the sensing indication information indicates that a network element requested by the network element discovery request message is used to sense a service.

According to a sixth aspect, a method for selecting a network element in a communication sensing service is provided. The method includes:
A UDM network element receives a request message from an NEF network element or an SF network element, where the request message is used to request to obtain a serving AMF of UE, and the request message includes information about the UE.

The UDM network element returns a response message of the request message to the NEF network element based on the request message, where the response message includes an identifier of the serving AMF network element of the UE.

In addition, a method for selecting a network element in a communication sensing service is further provided. The method includes:
An AMF network element obtains a sensing capability of the AMF network element.

The AMF network element registers the sensing capability of the AMF network element with an NRF network element; or the AMF network element reports the sensing capability of the AMF network element.

Optionally, the AMF may report the sensing capability of the AMF network element to the SF network element.

According to a seventh aspect, a communication apparatus is provided. The communication apparatus has a function of implementing the method in any one of the first aspect to the sixth aspect, or the method in any one of the possible implementations of the first aspect to the sixth aspect. The function may be implemented by hardware, or may be implemented by hardware executing corresponding software. The hardware or the software includes one or more units corresponding to the foregoing functions.

According to an eighth aspect, a communication apparatus is provided, including a processor and a memory. Optionally, the communication apparatus may further include a transceiver. The memory is configured to store a computer program, and the processor is configured to invoke and run the computer program stored in the memory, and control the transceiver to receive and send a signal, so that the communication apparatus performs the method in any one of the first aspect to the sixth aspect, or the method in any one of the possible implementations of the first aspect to the sixth aspect.

According to a ninth aspect, a communication apparatus is provided, including a processor and a communication interface. The communication interface is configured to receive data and/or information, and transmit the received data and/or information to the processor. The processor processes the data and/or information. The communication interface is further configured to output the data and/or information processed by the processor, so that the method in any one of the first aspect to the sixth aspect is performed, or the method in any one of the possible implementations of the first aspect to the sixth aspect.

According to a tenth aspect, a computer-readable storage medium is provided, where the computer-readable storage medium stores computer instructions, and when the computer instructions are run on a computer, the method in any one of the first aspect to the sixth aspect is performed, or the method in any one of the possible implementations of the first aspect to the sixth aspect is performed.

According to an eleventh aspect, a computer program product is provided, where the computer program product includes computer program code, and when the computer program code is run on a computer, the method in any one of the first aspect to the sixth aspect is performed, or the method in any one of the possible implementations of the first aspect to the sixth aspect is performed.

According to a twelfth aspect, a wireless communication system is provided, including one or more network elements in the method in any one of the first aspect to the sixth aspect.

Optionally, the corresponding network element may be an NEF network element, a sensing network element, an AMF network element, a RAN network element, an NRF network element, or a UDM network element.

### BRIEF DESCRIPTION OF DRAWINGS

FIG. 1 shows an example of an architecture of a 5G communication system applicable to an embodiment of this application;
FIG. 2 is a schematic diagram of a service-based architecture;
FIG. 3 shows an example of a network architecture according to this application;
FIG. 4 shows an example of another network architecture according to this application;
FIG. 5 is a schematic flowchart in which an SF, an AMF, or a RAN registers a sensing capability in an architecture 1 according to this application;
FIG. 6 is a schematic flowchart in which an SF or a RAN registers a sensing capability in an architecture 2 according to this application;
FIG. 7 is an architectural diagram of a communication system according to this application;
FIG. 8(a) is a schematic flowchart of a method for selecting a network element according to this application;
FIG. 8(b) is a schematic flowchart of another method for selecting a network element according to this application;
FIG. 8(c) is a schematic flowchart of another method for selecting a network element according to this application;
FIG. 9 is an architectural diagram of another communication system according to this application;
FIG. 10 is a schematic flowchart of another method for selecting a network element according to this application;
FIG. 11 is a schematic flowchart of a method for selecting a network element according to this application;
FIG. 12 is a schematic flowchart of another method for selecting a network element according to this application;
FIG. 13A and FIG. 13B are a schematic flowchart of another method for selecting a network element according to this application;
FIG. 14 is a schematic flowchart of another method for selecting a network element according to this application;
FIG. 15 is a schematic flowchart of another method for selecting a network element according to this application;
FIG. 16 is a schematic block diagram of a communication apparatus according to this application; and
FIG. 17 is a schematic diagram of a structure of a communication apparatus according to this application.

### DESCRIPTION OF EMBODIMENTS

The following describes technical solutions of embodiments in this application with reference to accompanying drawings.

The method in embodiments of this application is applicable to a long term evolution (long term evolution, LTE) system, a long term evolution-advanced (long term evolution-advanced, LTE-A) technology system, an enhanced long term evolution (enhanced long term evolution, eLTE) technology system, a 5th generation (5th generation, 5G) mobile communication system, and a new radio (New Radio, NR) system, and the method may also be extended to similar wireless communication systems, for example, wireless fidelity (wireless fidelity, Wi-Fi), worldwide interoperability for microwave access (worldwide interoperability for microwave access, WiMAX), and a cellular system related to the 3rd Generation Partnership Project (3rd generation partnership project, 3GPP).

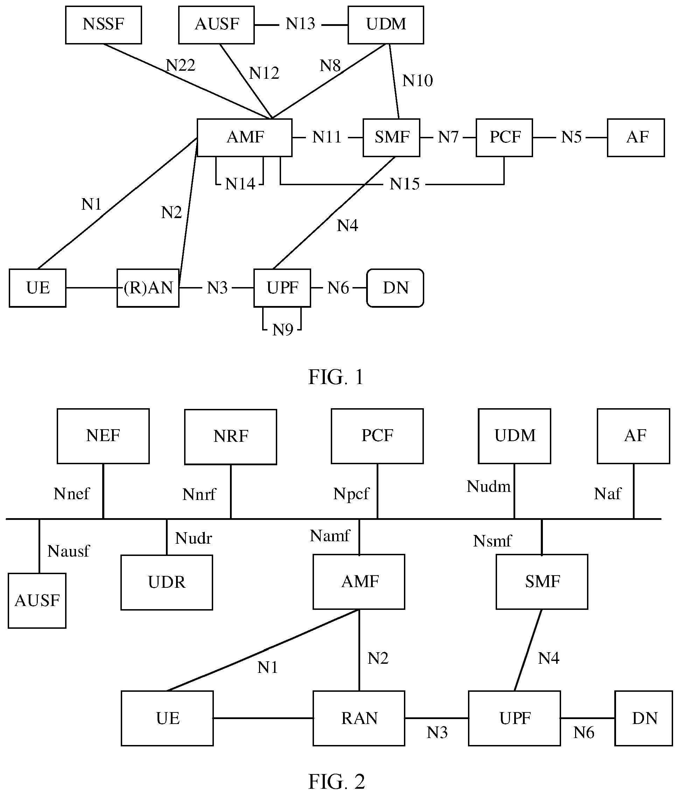

With the update of mobile communication technologies, 5G networks are constructed in a flexible and efficient manner. The 5G network may use a communication sensing capability as a new capability. For example, a system architecture of the 5G network may be shown in FIG. 1.

FIG. 1 shows an example of an architecture of a 5G communication system applicable to an embodiment of this application. Functions of a terminal device and various network entities are described below.

Terminal device: The terminal device may also be referred to as user equipment (user equipment, UE), an access terminal, a terminal device unit (subscriber unit), a terminal device station, a mobile station, a mobile station (mobile station, MS), a remote station, a remote terminal, a mobile device, a user terminal, a terminal (terminal), a wireless communication device, a terminal device agent, or a terminal device apparatus.

Radio access network (radio access network, RAN): The radio access network is a network including a plurality of 5G-RAN nodes, to implement a radio physical layer function, resource scheduling and radio resource management, radio access control, and a mobility management function. A 5G-RAN is connected to a UPF through a user plane interface N3, and is configured to transmit data of a terminal device. The 5G-RAN establishes a control plane signaling connection to an AMF through a control plane interface N2, to implement functions such as radio access bearer control.

Access and mobility management function (access and mobility management function, AMF): The access and mobility management function is responsible for UE authentication, UE mobility management, network slice selection, and SMF selection, functions as an anchor of a signaling connection between N1 and N2, provides a route of an N1/N2 SM message for an SMF, and maintains and manages UE status information.

User plane function (user plane function, UPF): The user plane function serves as an anchor point of a PDU session connection, and is responsible for data packet filtering, data transmission/forwarding, rate control, charging information generation, and the like of user equipment.

Unified data management (unified data management, UDM): The unified data management is mainly used to manage and control user data, for example, management of subscription information, including obtaining subscription information from a unified data repository (unified data repository, UDR) and providing the subscription information to another network element (for example, an AMF); generating an authentication credential of a third generation partnership project (third generation partnership project, 3GPP) for UE; and registering and maintaining a network element currently serving the UE, for example, an AMF currently serving the UE (that is, a serving AMF).

Network exposure function (network exposure function, NEF): The network exposure function is used for a connection and interaction between another internal network element of a core network and an external application server of the core network, to provide network capability information for the external application server, or provide information about the external application server for a core network element.

Application function (application function, AF): The application function interacts with a core network element to provide some services, for example, interacts with a policy and control function (policy and control function, PCF) to perform service policy control, interacts with an NEF to obtain some network capability information or provide some application information for a network, and provides some data network access point information for the PCF to generate routing information of a corresponding data service.

Authentication server function (authentication server function, AUSF): The authentication server function is used to perform security authentication on UE when the UE accesses a network.

Network slice selection function (network slice selection function, NSSF): The network slice selection function selects a slice instance set for UE and determines an AMF set and allowed NSSAI for the UE.

Policy control function (policy control function, PCF): The policy control function provides configuration policy information for UE, and provides policy information for a control plane network element (for example, an AMF or an SMF) of a network to manage and control the UE.

Interfaces between the network elements are shown in FIG. 1.

FIG. 2 is a schematic diagram of a service-based architecture. As shown in FIG. 2, Nausf, Nnef, Npcf, Nudm, Naf, Namf, and Nsmf are service-based interfaces separately provided by the AUSF, NEF, PCF, UDM, AF, AMF, and SMF, and are used to invoke corresponding service-based operations. N1, N2, N3, N4, and N6 are interface sequence numbers.

In FIG. 1 and FIG. 2, names and functions of the interfaces between the network elements are as follows.
(1) N1 represents an interface between the AMF and the terminal; and may be configured to transfer a QoS control rule to the terminal device, and the like.
(2) N2 represents an interface between the AMF and the RAN, and may be configured to transfer radio bearer control information and the like from a core network side to the RAN.
(3) N3 represents an interface between the RAN and the UPF, and is mainly configured to transmit uplink and downlink user plane data between the RAN and the UPF.
(4) N4 represents an interface between the SMF and the UPF, and may be configured to transfer information between a control plane and a user plane, including delivery of forwarding rules, QoS control rules, traffic statistics rules, and the like from the control plane to the user plane, and reporting of user plane information.
(5) N5 represents an interface between the AF and the PCF, and may be configured to deliver an application service request and report a network event.
(6) N6 represents an interface between the UPF and the DN, and is configured to transmit uplink and downlink user data flows between the UPF and the DN.
(7) N7 represents an interface between the PCF and the SMF, and may be configured to deliver a protocol data unit (protocol data unit, PDU) session granularity control policy and a service data flow granularity control policy.
(8) N8 represents an interface between the AMF and the UDM, and may be used by the AMF to obtain, from the UDM, subscription data and authentication data related to access and mobility management, and used by the AMF to register current mobility management related information of the terminal with the UDM.
(9) N9 represents a user plane interface between the UPFs, and is configured to transmit uplink and downlink user data flows between the UPFs.
(10) N10 represents an interface between the SMF and the UDM, and may be used by the SMF to obtain, from the UDM, subscription data related to session management, and used by the SMF to register current session related information of the terminal with the UDM.
(11) N11 represents an interface between the SMF and the AMF, and may be configured to transfer PDU session tunnel information between the RAN and the UPF, transfer a control message to be sent to the terminal, transfer radio resource control information to be sent to the RAN, and the like.
(12) N12 represents an interface between the AMF and the AUSF, and may be used by the AMF to initiate an authentication process to the AUSF, where an SUCI may be carried as a subscription identifier.
(13) N13 represents an interface between the UDM and the AUSF, and may be used by the AUSF to obtain a user authentication vector from the UDM, to perform an authentication process.
(14) N15 represents an interface between the PCF and the AMF, and may be configured to deliver a terminal policy and an access control related policy.
(15) N35 represents an interface between the UDM and the UDR, and may be used by the UDM to obtain user subscription data information from the UDR.
(16) N36 represents an interface between the PCF and the UDR, and may be used by the PCF to obtain policy related subscription data and application data related information from the UDR.

The network elements or the functions may be network elements in a hardware device, may be software functions running on dedicated hardware, or may be virtualized functions instantiated on a platform (for example, a cloud platform). Optionally, the network elements or the functions may be implemented by one device, or may be jointly implemented by a plurality of devices, or may be one functional module in one device. This is not specifically limited in embodiments of this application.

The access network device in embodiments of this application may be a radio access network device.

In addition, the "network element" may also be referred to as an entity, a device, an apparatus, a module, or the like. This is not particularly limited in this application. Moreover, for ease of understanding and description, descriptions of the "network element" are omitted in some of the following descriptions. For example, the NEF network element is referred to as an NEF for short. In this case, the "NEF" should be understood as an NEF network element or an NEF entity. Descriptions of same or similar cases are omitted below.

It should be understood that FIG. 1 is merely an example of a network architecture, and the network architecture applicable to embodiments of this application is not limited thereto. Any network architecture that can implement functions of the foregoing network elements is applicable to embodiments of this application.

For example, in some network architectures, network function entities such as the AMF, the SMF, the PCF, and the UDM are all referred to as network function (network function, NF) network elements. Alternatively, in some other network architectures, a set of network elements such as the AMF, the SMF, the PCF, and the UDM may be referred to as a control plane function (control Plane function, CPF) network element.

The following uses the network elements in the 5G system as an example to describe specific solution details. It may be understood that when the solution is applied to an LTE system or a future communication system, each network element in the solution may be replaced with another network element having a corresponding function. This is not limited in this application.

With the evolution of communication technologies, in future wireless communication, when a RAN performs wireless communication by using a millimeter-wave frequency band, the RAN naturally has a sensing capability similar to that of a radar, that is, the RAN has both a wireless communication capability and a sensing and identification capability. Based on this, the RAN may provide a sensing service for an AF, an AS, UE, or the like that has a sensing service requirement. Specifically, a sensing network element obtains a sensing requirement from the AF, the AS, or the UE, controls the RAN to perform a corresponding sensing operation, processes sensing data obtained by performing the sensing operation by the RAN, generates sensing service data, and provides the sensing service data to the AF/AS or the UE.

An A or As in this specification indicate one or more As. For example, an SF ID or SF IDs indicate one or more SF IDs, and an AMF ID or AMF IDs indicate one or more AMF IDs. Details are not described below again.

Alternatively, in this application, a service type may also be referred to as a sensing service type, a service requirement may also be referred to as a sensing requirement, and sensing data may also be referred to as sensing service data, sensing service data, sensing application data, or the like.

In addition, in this application, a message A includes information a, or may be replaced with that a message A includes information a, or a message A carries information a. Details are not described below.

In addition, that a network element A determines or selects C based on a message B may also be represented as that a network element A determines or selects C based on a message B.

The following describes a method for selecting a network element having a sensing capability for a sensing service provided in this application, to ensure that an appropriate network element is selected in a sensing architecture of a fifth generation system (fifth generation system, 5GS) to support the sensing service in an end-to-end manner.

The technical solutions of this application are based on the following two design guidelines.

### Guideline 1:

An RAN registers a sensing capability with an NRF.

An AMF registers a sensing capability with the NRF. The sensing capability of the AMF may be a service scope, a supported sensing requirement, and a supported sensing service type of the AMF. The service scope may be obtained based on a network topology or network connectivity. The service scope, the supported sensing requirement, and the supported sensing service type may alternatively be obtained based on a network configuration. ARAN that can be connected to the AMF may include a RAN that supports a sensing feature (or has a sensing capability) and/or a RAN that does not support a sensing feature.

An SF registers a sensing capability with the NRF. Similarly, the sensing capability of the SF may be a service scope, a supported sensing requirement, and a supported sensing service type of the SF. The service scope may be obtained based on a network topology or network connectivity. The service scope, the supported sensing requirement, and the supported sensing service type may alternatively be obtained based on a network configuration. An AMF/RAN that can be connected to the SF may include an AMF/RAN that supports a sensing feature and/or an AMF/RAN that does not support a sensing capability.

In other words, in Guideline 1, the sensing capability of the AMF or the SF is decoupled from the sensing capability of the RAN.

### Guideline 2:

An RAN registers a sensing capability with an NRF.

An AMF registers a sensing capability with the NRF. The sensing capability of the AMF may be obtained based on the sensing capability reported by the RAN or RANs. In other words, the AMF may form the sensing capability of the AMF based on the sensing capability of the RAN. To be specific, the sensing capability of the RAN or RANs supporting the sensing capability is considered for the sensing capability registered by the AMF with the NRF.

An SF registers a sensing capability with the NRF. The sensing capability of the SF may be obtained based on the sensing capability reported by the RAN or RANs, or may be obtained based on the sensing capability reported by the AMF or AMFs. In other words, the SF may form the sensing capability of the SF based on the sensing capability of the RAN/AMF. To be specific, the sensing capability of the RAN or RANs/AMF or AMFs supporting the sensing capability is considered for the sensing capability registered by the SF with the NRF.

In other words, in Guideline 2, the sensing capability of the AMF or the SF is coupled with the sensing capability of the RAN.

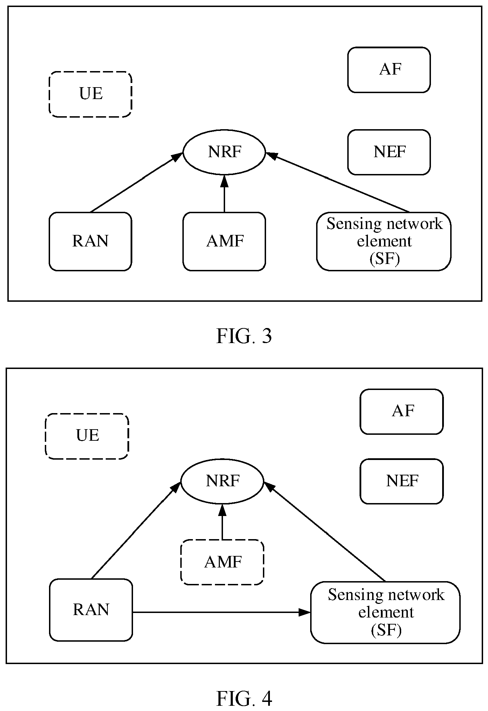

This application provides a network architecture shown in FIG. 3.

FIG. 3 shows an example of the network architecture according to this application. The architecture is referred to as an architecture 1 below.

In the architecture 1, there is no direct interface between a RAN and an SF. In the architectural diagram, there is an AMF network element, but there may be UE or there may be no UE. When the UE needs to be sensed, the UE needs to be included. When an area needs to be sensed, the UE may not be included. There may be an interface or no interface between the RAN and an NRF. When the interface exists, the RAN can register a sensing capability of the RAN with the NRF.

This application provides another network architecture shown in FIG. 4.

FIG. 4 shows an example of the another network architecture according to this application. The architecture is referred to as an architecture 2 below.

In the architecture 2, there is a direct interface between a RAN and an SF. In the architectural diagram, there may be an AMF network element or no AMF network element, and there may be UE or no UE. When the UE needs to be sensed, the UE needs to be included, and the AMF may or may not be included. When an area needs to be sensed, the UE may not be included, or the AMF may not be included. There may be an interface or no interface between the RAN and an NRF. When the interface exists, the RAN can register a sensing capability of the RAN with the NRF.

Based on the foregoing architecture 1 and architecture 2, manners of obtaining sensing capabilities of the following three network elements (the RAN network element, the AMF network element, and the SF network element) may be obtained:

### (1) RAN node

The RAN node may directly register the sensing capability with the NRF.

### (2) AMF network element

In an implementation, the RAN reports the sensing capability to the AMF network element, and the AMF network element forms the sensing capability of the AMF network element based on the sensing capability from one or more RAN network elements, and registers the sensing capability with the NRF. To be specific, the sensing capability of the RAN or RANs supporting the sensing capability is considered for the sensing capability registered by the AMF with the NRF.

In another implementation, the sensing capability of the AMF may include a service scope, a supported sensing requirement, and a supported sensing service type of the AMF. The service scope may be obtained based on a network topology or network connectivity. The sensing capability (for example, the service scope, the supported sensing requirement, and the supported sensing service type) of the AMF may alternatively be obtained based on a network configuration and registered with the NRF. The sensing capability registered by the AMF with the NRF may include a RAN that supports the sensing capability and/or a RAN that does not support the sensing capability.

### (3) SF network element

In an implementation, the RAN reports the sensing capability to the AMF network element, and the AMF network element obtains the sensing capability of the AMF network element based on the sensing capability reported by the RAN or RANs, and reports the sensing capability of the AMF to the SF network element. The SF network element further obtains the sensing capability of the SF based on the sensing capability reported by the AMF or AMFs, and registers the sensing capability with the NRF.

In another implementation, the RAN directly reports the sensing capability to the SF, and the SF obtains the sensing capability of the SF based on the sensing capability reported by the RAN or RANs, and registers the sensing capability with the NRF.

In another implementation, the SF obtains a service scope of the SF based on a network topology and/or network connectivity. The sensing capability of the SF may include the service scope, a supported sensing requirement, and a supported sensing service type. The sensing capability of the SF may alternatively be obtained based on a network configuration. After obtaining the sensing capability of the SF, the SF registers the sensing capability with the NRF. The sensing capability registered by the SF with the NRF may include an AMF or AMFs/a RAN or RANs supporting the sensing capability, and/or an AMF or AMFs/a RAN or RANs not supporting the sensing capability.

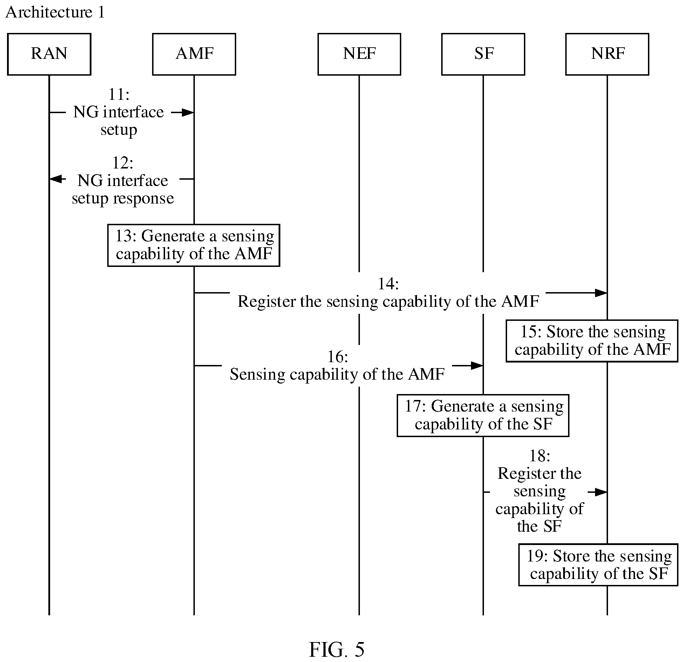

FIG. 5 is a schematic flowchart in which an SF, an AMF, or a RAN registers a sensing capability in the architecture 1 according to this application.

11: The RAN establishes an NG interface connection to the AMF.

Specifically, after being started, the RAN initiates establishment of the NG interface connection to the AMF. The RAN sends an NG interface setup/update request message to the AMF. For example, the NG interface setup/update request message may carry one or more of a sensing support indication 1, a supported sensing range 1, a supported sensing requirement 1, and a supported sensing service type 1.

The sensing support indication 1 indicates that the RAN has a sensing capability or that the RAN supports a sensing feature. The supported sensing range 1 indicates an area range that can be sensed by the RAN, for example, the area range may be a two-dimensional plane, may be a three-dimensional space, or may be a cell ID or a RAN ID. The supported service type 1 indicates a service type that can be supported by the RAN.

Optionally, the RAN registers the sensing capability of the RAN with an NRF.

Specifically, the RAN sends a sensing capability registration request message to the NRF, where the sensing capability registration request message is used to request to register the sensing capability of the RAN, or the sensing capability registration request message is used to request to register the sensing capability of the RAN with the NRF.

Optionally, the sensing capability of the RAN includes one or more of the following:
a sensing distance, a sensing area, a sensing speed range, a sensing distance resolution, sensing angle measurement precision, a sensing speed resolution, a QoS requirement, sensing object identification accuracy, a false alarm rate of sensing object identification, sensing data precision, a sensing data update frequency, a sensing dimension, a sensing feedback manner, and a service type that are supported by the RAN.

Alternatively, the sensing capability registration request message includes one or more of the following:
a sensing distance, a sensing area, a sensing speed range, a sensing distance resolution, sensing angle measurement precision, a sensing speed resolution, a sensing quality of service QoS requirement, sensing object identification accuracy, a false alarm rate of sensing object identification, sensing data precision, a sensing data update frequency, a sensing dimension, a sensing feedback manner, and a service type.

12: The AMF returns a response message of the NG interface setup/update request message to the RAN.

Optionally, the response message may include a sensing support indication 2, indicating that the AMF has a sensing capability or the AMF supports a sensing feature.

13: The AMF obtains the sensing capability of the AMF based on a sensing capability of one or more RANs.

The sensing capability of the AMF may include a sensing range (that is, a service scope or a sensing service scope), a sensing requirement, a sensing service type, and the like that are supported by the AMF.

For example, the sensing service type supported by the AMF may be obtained based on "a sensing service type that is reported by the RAN and that is supported by the RAN". The sensing requirement supported by the AMF may be obtained based on "a sensing requirement that is reported by the RAN and that is supported by the RAN".

Optionally, the sensing capability of the AMF may form a sensing list, which is denoted as a list 1 (that is, a list 1) below. Optionally, the sensing capability reported by each RAN is used as an entry in the list 1.

Optionally, if the service scope of the sensing capability of the AMF is configured in a network, steps 11 to 13 do not need to be performed.

14: The AMF registers the obtained sensing capability with the NRF.

Specifically, the AMF sends a sensing capability registration request message to the NRF, where the sensing capability registration request message is used to request to register the sensing capability of the AMF, or the sensing capability registration request message is used to request to register the sensing capability of the AMF with the NRF.

Optionally, the sensing capability of the AMF includes one or more of a sensing distance, a sensing area, a sensing speed range, a sensing distance resolution, sensing angle measurement precision, a sensing speed resolution, a QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a RAN network element type, an access type, and a RAT type that are supported by the AMF.

Alternatively, the sensing capability registration request message includes one or more of the following supported by the AMF:
a sensing distance, a sensing area, a sensing speed range, a sensing distance resolution, sensing angle measurement precision, a sensing speed resolution, a sensing quality of service QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a RAN network element type, an access type, and a RAT type.

15: The NRF stores the sensing capability of the AMF.

16: The AMF reports the sensing capability generated by the AMF to the SF.

17: The SF obtains a sensing capability of the SF based on the sensing capability reported by one or more AMFs.

As described above, the sensing capability of the SF may include a sensing range, a sensing requirement, a sensing service type, and the like that are supported by the SF.

The sensing service type supported by the SF may be obtained based on "the sensing service type that is reported by the AMF and that is supported by the AMF". The sensing requirement supported by the SF may be obtained based on "the sensing requirement that is reported by the AMF and that is supported by the AMF".

Optionally, if information about the sensing capability of the SF is configured in the network, steps 16 and 17 do not need to be performed.

18: The SF registers the obtained sensing capability with the NRF.

Specifically, the SF sends a sensing capability registration request message to the NRF, where the sensing capability registration request message is used to request to register the sensing capability of the SF, or the sensing capability registration request message is used to request to register the sensing capability of the SF with the NRF.

Optionally, the sensing capability of the SF includes one or more of a sensing distance, a sensing area, a sensing speed range, a sensing distance resolution, sensing angle measurement precision, a sensing speed resolution, a QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a RAN network element type, an access type, and a RAT type that are supported by the SF.

Alternatively, the sensing capability registration request message includes one or more of the following supported by the SF:
a sensing distance, a sensing area, a sensing speed range, a sensing distance resolution, sensing angle measurement precision, a sensing speed resolution, a QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a RAN network element type, an access type, and a RAT type.

19: The NRF stores the sensing capability of the SF.

Optionally, if the information about the sensing capability of the SF is preconfigured in the AMF or the NEF, steps 18 and 19 do not need to be performed.

The RAN, the AMF, or the SF registers the sensing capability of the RAN, the AMF, or the SF with the NRF independently, and it is not necessary for the RAN, the AMF, or the SF to register the sensing capability of the RAN, the AMF, or the SF with the NRF. For example, the RAN does not register the sensing capability thereof with the NRF, and the AMF and the SF register the sensing capabilities of the AMF and the SF with the NRF.

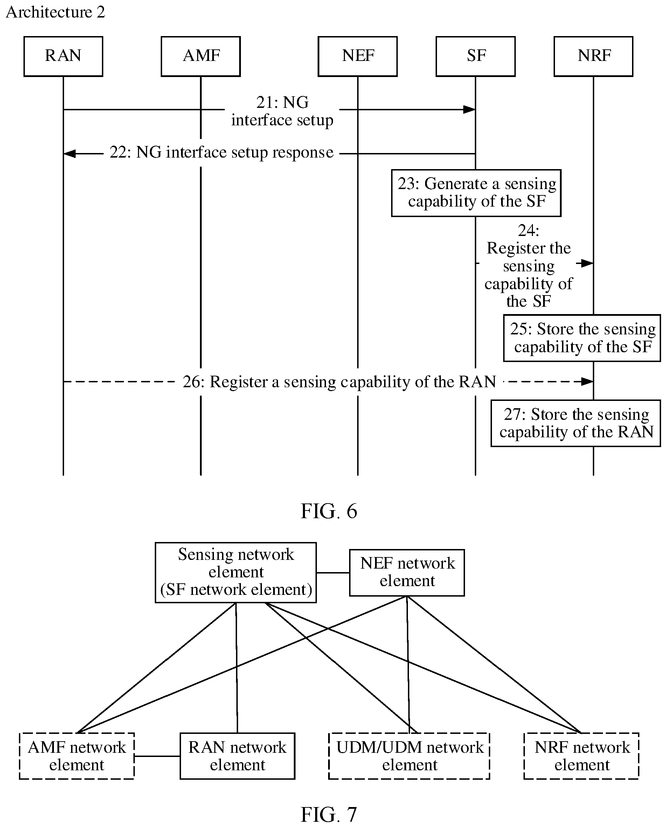

FIG. 6 is a schematic flowchart in which an SF or a RAN registers a sensing capability in the architecture 2 according to this application.

21: The RAN establishes an NG sensing signaling interface connection to the SF.

Specifically, after being started, the RAN initiates establishment of a sensing signaling interface connection to the SF. The RAN sends an NG interface setup/update request message to the SF. The NG interface setup/update request message may carry one or more of a sensing support indication 1, a supported sensing range 1, a supported sensing requirement 1, and a supported sensing service type 1.

The sensing support indication 1 indicates that the RAN has a sensing capability or that the RAN supports a sensing feature. The supported sensing range 1 indicates an area range that can be sensed by the RAN, for example, the area range may be a two-dimensional plane, may be a three-dimensional space, or may be a cell ID or a RAN ID. The supported sensing requirement 1 indicates a sensing requirement supported by the RAN. The supported sensing service type 1 indicates a service type that can be supported by the RAN.

Optionally, the RAN registers the sensing capability of the RAN with an NRF.

Optionally, the sensing capability of the RAN includes one or more of the following:
a sensing distance, a sensing area, a sensing speed range, a sensing distance resolution, sensing angle measurement precision, a sensing speed resolution, a QoS requirement, sensing object identification accuracy, a false alarm rate of sensing object identification, sensing data precision, a sensing data update frequency, a sensing dimension, a sensing feedback manner, a service type, a RAN node type, an access type, and a RAT type that are supported by the RAN.

Alternatively, a sensing capability registration request message includes one or more of the following:
a sensing distance, a sensing area, a sensing speed range, a sensing distance resolution, sensing angle measurement precision, a sensing speed resolution, a sensing quality of service QoS requirement, sensing object identification accuracy, a false alarm rate of sensing object identification, sensing data precision, a sensing data update frequency, a sensing dimension, a sensing feedback manner, a service type, a RAN node type, an access type, and a RAT type.

22: The SF returns a response message of the NG interface setup/update request message to the RAN.

Optionally, the response message may include a sensing support indication 2, indicating that the SF has a sensing capability or the SF supports a sensing feature.

23: The SF obtains the sensing capability of the SF based on the sensing capability reported by one or more RANs.

For example, a service type supported by the SF may be obtained based on "the service type that is reported by the RAN and that is supported by the RAN". A sensing requirement supported by the SF may be obtained based on "the sensing requirement that is reported by the RAN and that is supported by the RAN".

Optionally, if information about the sensing capability of the SF is configured in a network, steps 21 to 23 do not need to be performed.

24: The SF registers the obtained sensing capability with the NRF.

Specifically, the SF may request, via the sensing capability registration request message, to register the sensing capability of the SF with the NRF. For details, refer to step 18 in the foregoing architecture 1. To avoid repetition, details are not described herein again.

25: The NRF stores the sensing capability of the SF.

Optionally, if the information about the sensing capability of the SF is preconfigured in an AMF or an NEF, steps 24 and 25 do not need to be performed.

Optionally, the RAN registers the sensing capability of the RAN with the NRF, as shown in steps 26 and 27.

26: The RAN registers the sensing capability of the RAN with the NRF.

Specifically, the RAN sends the sensing capability registration request message to the NRF, where the sensing capability registration request message is used to request to register the sensing capability of the RAN, or the sensing capability registration request message is used to request to register the sensing capability of the SF with the NRF.

Optionally, the sensing capability of the RAN includes one or more of the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the RAN node type, the access type, and the RAT type that are supported by the RAN.

Alternatively, the sensing capability registration request message includes one or more of the following supported by the RAN:
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the RAN node type, the access type, and the RAT type.

27: The NRF stores the sensing capability of the RAN.

It should be understood that because an area (or a RAN) may be served by a plurality of SFs, the SF may select an appropriate RAN based on the NRF.

In addition, a sensing support indication for interaction between the RAN and the AMF is optional, because the "NG sensing signaling interface setup/request message" may indicate that the RAN supports the sensing capability. Correspondingly, the AMF returns a response message to the RAN, and the response message may also indicate that the AMF supports the sensing capability.

In the foregoing two architectures, an interface between the RAN and the SF may be a physical interface or a logical interface.

In the foregoing embodiments in which the RAN, the AMF, and the SF request to register the sensing capability of each of the RAN, the AMF, and the SF with the NRF, the RAN, the AMF, and the SF are collectively referred to as a third network element. In other words, the third network element may be the RAN, the AMF, or the SF.

Based on the manner of obtaining the sensing capabilities of the network elements provided in this application, after receiving a sensing service request, a 5GS may select an appropriate network element for a requested sensing service, to support the sensing service in an end-to-end manner.

For example, based on a case that the sensing service is triggered by an AF/AS or triggered by UE, this application provides several different communication system architectures. The following separately describes the architectures.

The NEF network element in all the following embodiments may also be replaced with a gateway sensing center. In other words, operations and/or processing performed by the NEF network element in the embodiments may be performed by the gateway sensing center.
1. The AF/AS triggers the sensing service.

In an embodiment, the NEF network element receives a first sensing service request message that is from the AF or the AS and that is used to request a first sensing service. The NEF network element sends a second sensing service request message to a target first network element based on the first sensing service request message, where the second sensing service request message is used to request the first sensing service.

Optionally, in an implementation, a first network element may be an AMF network element, and correspondingly, the target first network element may be the AMF network element.

Optionally, in another implementation, a first network element may be a sensing network element (namely, an SF network element), and correspondingly, the target first network element may be the SF network element.

The following describes the implementations in detail.

FIG. 7 is an architectural diagram of a communication system according to this application.

As shown in FIG. 7, the communication system may include an NEF network element, a sensing network element, and a RAN network element.

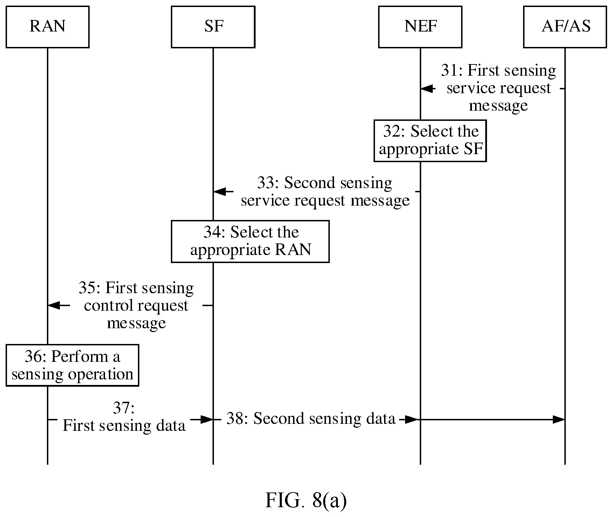

Based on the architecture in FIG. 7, this application provides a procedure of network element selection shown in FIG. 8(a).

FIG. 8(a) is a schematic flowchart of a method for selecting a network element according to this application.

31: The NEF network element receives a first sensing service request message from an AF or AS, where the first sensing service request message is used to request a first sensing service.

The first sensing service request message includes an identifier of UE or area information.

For example, if the first sensing service request is for sensing the UE, the first sensing service request message includes the identifier of the UE. If the first sensing service request message is for sensing an area, the first sensing service request message includes the area information. Optionally, the identifier of the UE included in the first sensing service request message is an external identifier.

Optionally, the first sensing service request message further includes one or more of the following:
a sensing distance, a sensing area, a sensing speed range, a sensing distance resolution, sensing angle measurement precision, a sensing speed resolution, a QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, and a sensing application identifier.

32: The NEF network element selects an appropriate sensing network element based on the first sensing service request message.

In this application, the "appropriate network element" may be a network element that supports a requested sensing service.

For example, after the NEF receives the first sensing service request message used to request the first sensing service, step 32 of selecting an appropriate sensing network element may mean that the NEF selects a sensing network element that supports the first sensing service.

Optionally, the NEF may further select one sensing network element from a plurality of sensing network elements based on one or more of load information corresponding to the sensing network element, a supported service scope, a supported RAN node type, an access type, and a RAT type.

It should be understood that, in other embodiments, selecting an appropriate network element is also similar to that described above.

In an implementation, if information about a sensing capability of the SF network element is preconfigured in the NEF network element, the NEF may select, based on the preconfigured sensing capability of the SF network element and the identifier of the UE or the area information, and with reference to a service type, a service requirement, a QoS requirement, and the like of the first sensing service, the sensing network element that supports the first sensing service.

In another implementation, if information about a sensing capability of the SF is not configured in the NEF network element, the NEF may request NRF to obtain the SF network element that supports the first sensing service.

For example, the NEF network element sends a network element discovery request message to the NRF network element, where the network element discovery request message includes network element type information, and the network element type information indicates a network element type requested by the NEF network element. For example, if the NEF network element requests to obtain the SF network element, the network element type information indicates an SF network element type. For another example, if the NEF network element requests an AMF network element, the network element type information indicates an AMF network element type. In step 32, a network element type in the network element discovery request message specifically indicates the SF network element.

In addition, the network element discovery request message further includes location information of the UE and/or an identifier of a serving AMF of the UE (for example, sensing for the UE), or the network element discovery request message may further include the area information (for example, sensing for an area).

Optionally, the network element discovery request message further includes one or more of the following:
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, a RAN node type, an access type, and a RAT type.

One or more of the foregoing items included in the network element discovery request message are determined based on the first sensing service request message.

The NEF network element receives a response message that is of the network element discovery request message and that is from the NRF network element, where the response message indicates one or more SF network elements (that is, one or more sensing network elements) that support the first sensing service. For example, the response message includes an identifier of one or more SFs, that is, an SF ID or SF IDs supporting the first sensing service.

The NEF network element selects an appropriate SF network element (that is, the sensing network element) based on the SF ID or SF IDs.

As described in step 32, after the NEF network element receives the first sensing service request message, the NEF network element may request the NRF to obtain a first network element (which is specifically the SF network element) that supports the first sensing service, and the NRF returns one or more first network elements to the NEF network element. The NEF network element selects a target first network element from the one or more first network elements.

In other words, in this embodiment, the "first network element" is the SF network element, and correspondingly, the target first network element is the SF network element.

In this embodiment, the network element type information included in the network element discovery request message specifically indicates that a requested network element is of a first network element type. For example, the first network element type is the SF network element type, in other words, the NEF network element requests to obtain the SF network element.

In addition, in this application, network elements that send the network element discovery request message to the NRF are collectively referred to as a fourth network element. In other words, the fourth network element may request to obtain a third network element by using the NRF network element.

For example, the fourth network element may be the NEF network element, and the third network element requested by the NEF network element from the NRF may be the AMF network element or the SF network element. As shown in step 32, the NEF network element requests the NRF to obtain the SF network element.

In the following description, the fourth network element may alternatively be the AMF network element, and the third network element requested by the AMF network element from the NRF may be the SF network element.

Alternatively, the fourth network element may further be the SF network element, and the third network element requested by the SF network element from the NRF may be the AMF network element or the RAN network element.

33: The NEF network element sends a second sensing service request message to the selected sensing network element.

The second sensing service request message includes the identifier of the UE or the area information.

It should be understood that the identifier of the UE or the area information included in the second sensing service request message is determined based on the first sensing service request message, and specifically, is determined based on the identifier of the UE or the area information included in the first sensing service request message.

Optionally, the identifier of the UE included in the second sensing service request message is an internal identifier, for example, a subscription permanent identifier (subscription permanent identifier, SUPI).

Optionally, the second sensing service request message further includes one or more of the following:
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, and the sensing application identifier.

After receiving the second sensing service request message, the sensing network element sends a sensing control request message to a target second network element based on the second sensing service request message, where the sensing control request message is used to request the RAN network element to perform a sensing operation on the first sensing service.

In an implementation, a second network element may be the AMF network element, and correspondingly, the target second network element may be the AMF network element. In other words, in this implementation, after receiving the second sensing service request message, the sensing network element sends a sensing control request message 1 to the AMF network element (an example of the target second network element), and the AMF network element further selects an appropriate RAN network element, and sends a sensing control request message 2 to the selected RAN network element. The sensing control request message 1 or the sensing control request message 2 is used to control the RAN network element to perform the sensing operation on the first sensing service.

In an implementation, a second network element may be the RAN network element, and correspondingly, the target second network element may be the RAN network element. In other words, in this implementation, after receiving the second sensing service request message, the sensing network element directly sends a sensing control request message 1 to the RAN network element (another example of the target second network element). The sensing control request message 1 is used to control the RAN network element to perform the sensing operation on the first sensing service.

In this embodiment, an example in which the second network element is the RAN network element is used for description, as shown in the following steps 34 and 35.

34: The sensing network element further selects the appropriate RAN network element based on the second sensing service request message.

Similar to step 32, that the sensing network element selects an appropriate RAN network element may mean that the sensing network element selects a RAN network element that supports the first sensing service. Optionally, the sensing network element may further select one RAN network element from one or more RAN network elements based on one or more of a sensing range, a RAN node type, an access type, and a RAT type that are supported by the RAN or RANs.

For example, the sensing network element sends a network element discovery request message to the NRF network element, where the network element discovery request message includes network element type information, and the network element type information indicates a network element type requested by the NEF network element. For example, if the sensing network element requests to obtain the RAN network element, the network element type information indicates a RAN network element type.

In addition, the network element discovery request message further includes the location information of the UE and/or the identifier of the serving AMF of the UE (for example, sensing for the UE), or the network element discovery request message may further include the area information (for example, sensing for an area).

Optionally, the network element discovery request message further includes one or more of the following:
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, a required RAN node type, a required access type, and a required RAT type.

It should be understood that the information is used by the NRF to determine the RAN network element.

The sensing network element receives a response message that is of the network element discovery request message and that is from the NRF network element, where the response message indicates one or more RAN network elements (that is, one or more second network elements) that support the first sensing service. For example, the response message includes an identifier of the one or more RAN network elements, that is, a RAN ID or RAN IDs supporting the first sensing service.

The sensing network element selects the appropriate RAN network element (that is, the target second network element) based on the RAN ID or RAN IDs.

35: The sensing network element sends a first sensing control request message to the selected RAN network element, to control the RAN network element to perform the sensing operation on the first sensing service.

Optionally, the first sensing control request message may include one or more of the following:
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, a sensing service type, the sensing requester type, the sensing requester identifier, the sensing application type, and the sensing application identifier.

36: The RAN network element performs the sensing operation based on the first sensing control request message, to obtain first sensing data of the first sensing service.

37: The RAN network element sends the first sensing data to the sensing network element.

38: The sensing network element provides second sensing data to the AF/AS by using the NEF network element.

Optionally, the second sensing data is the first sensing data. Alternatively, the second sensing data may be obtained based on the first sensing data.

Based on the procedure in FIG. 8(a), a 5GS may select an appropriate network element having a sensing capability for the first sensing service, to support the sensing service in an end-to-end manner. Specifically, after receiving the first sensing service request message for requesting the first sensing service, the NEF network element selects the appropriate sensing network element based on the first sensing service request message, then the sensing network element selects the appropriate RAN network element, and the selected RAN network element performs the sensing operation on the first sensing service, to select the appropriate network element for the first sensing service.

Optionally, the communication system shown in FIG. 7 may further include an AMF network element.

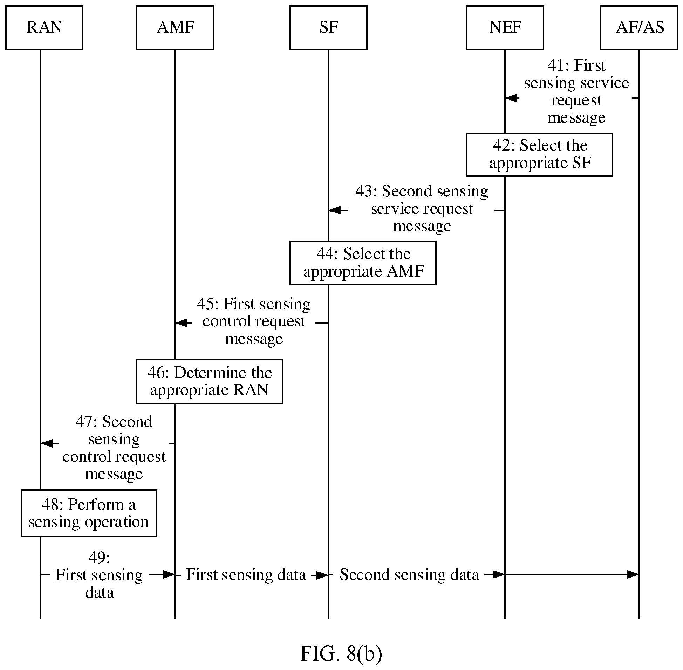

FIG. 8(b) is a schematic flowchart of another method for selecting a network element according to this application.

41: The NEF network element receives a first sensing service request message from an AF or AS, where the first sensing service request message is used to request a first sensing service.

42: The NEF network element selects a sensing network element based on a sensing capability registered with the NRF.

Similar to the descriptions of step 32, the sensing network element selected by the NEF network element in step 42 is an example of a "target first network element" in this application.

43: The NEF network element sends a second sensing service request message to the selected sensing network element.

For detailed descriptions of steps 41 to 43, refer to steps 31 to 33. Details are not described herein again.

44: The sensing network element further selects an appropriate AMF network element based on the second sensing service request message.

For example, the sensing network element may request the NRF network element to obtain an AMF network element that supports the first sensing service, and then select the appropriate AMF network element from one or more AMF network elements returned by the NRF network element.

For example, the sensing network element sends a network element discovery request message to the NRF network element, where the network element discovery request message includes network element type information, and the network element type information indicates a network element type requested by the sensing network element. For example, if the sensing network element requests to obtain the AMF network element, the network element type information indicates an AMF network element type.

In addition, the network element discovery request message further includes location information of UE and/or an identifier of a serving AMF of the UE (for example, sensing for the UE), or the network element discovery request message may further include area information (for example, sensing for an area).

Optionally, the network element discovery request message further includes one or more of the following:
a sensing distance, a sensing area, a sensing speed range, a sensing distance resolution, sensing angle measurement precision, a sensing speed resolution, a QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a RAN node type, an access type, and a RAT type.

It should be understood that one or more of the foregoing items included in the network element discovery request message are determined based on the first sensing service request message. The information is used by the NRF to determine the AMF network element.

The sensing network element receives a response message that is of the network element discovery request message and that is from the NRF network element, where the response message indicates one or more AMF network elements that support the first sensing service. For example, the response message includes an identifier of the one or more AMF network elements, that is, an AMF ID or AMF IDs supporting the first sensing service.

The sensing network element selects the appropriate AMF network element based on the AMF ID or the AMF IDs.

As described in step 44, after the sensing network element receives the second sensing service request message, the sensing network element may request, from the NRF based on the second sensing service request message, to obtain a second network element (which is specifically the AMF network element) that supports the first sensing service, and the NRF returns one or more second network elements to the NEF network element. The sensing network element selects a target second network element from the one or more second network elements.

In other words, in this embodiment, the second network element is the AMF network element, and correspondingly, the target second network element is the AMF network element.

45: The sensing network element sends a first sensing control request message to the selected AMF network element.

Optionally, the first sensing control request message includes one or more of the following:
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, a sensing service type, the sensing requester type, the sensing requester identifier, the sensing application type, and the sensing application identifier.

46: The AMF network element determines the RAN network element.

Optionally, the first sensing control request message includes information about the RAN network element, for example, a RAN ID and a cell identifier. The cell identifier may be a new radio cell global identifier (new radio cell global identifier, NCGI), an E-UTRAN cell global identifier (E-UTRAN cell global identifier, ECGI), or the like. The AMF determines the corresponding RAN network element based on the information about the RAN network element.

Alternatively, the first sensing control request message includes the area information, and the AMF determines the corresponding RAN network element based on the area information.

Alternatively, the first sensing control request message includes a UE ID, UE indication information (for example, a UE association identifier, indicating corresponding UE, for example, an endpoint identifier of a UE signaling connection between the SF and the AMF), or the location information of the UE, and the AMF determines the corresponding RAN network element based on the UE ID, the UE indication information, or the location information of the UE.

Optionally, there may be one or more RAN network elements determined by the AMF network element.

47: The AMF network element sends a second sensing control request message to the determined RAN network element.

Optionally, the second sensing control request message includes one or more of the following:
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, and the sensing application identifier.

48: The RAN network element performs a sensing operation based on the second sensing control request message, to obtain first sensing data of the first sensing service.

49: The RAN network element sends the first sensing data to the AMF network element.

Subsequently, the AMF network element provides the first sensing data to the sensing network element. The sensing network element provides second sensing data to the AF/AS by using the NEF network element.

Optionally, the second sensing data is the first sensing data.

Based on the procedure in FIG. 8(b), a 5GS may select an appropriate network element having a sensing capability for the first sensing service, to support the sensing service in an end-to-end manner. Specifically, after receiving the first sensing service request message for requesting the first sensing service, the NEF network element selects the appropriate sensing network element based on the first sensing service request message, the sensing network element selects the appropriate AMF network element, the AMF network element determines the corresponding RAN network element, and the determined RAN network element performs the sensing operation on the first sensing service, to select the appropriate network element for the first sensing service.

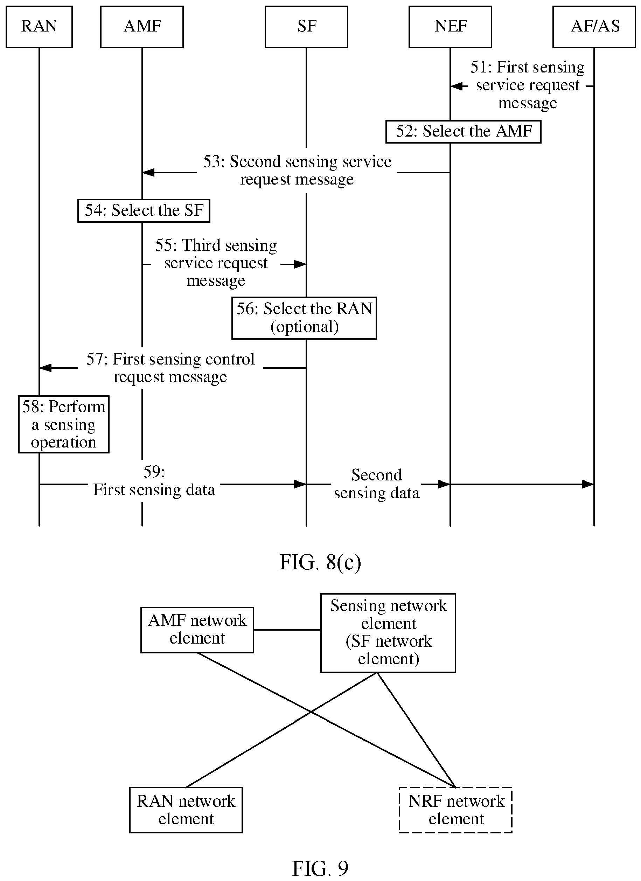

FIG. 8(c) is a schematic flowchart of another method for selecting a network element according to this application.

51: The NEF network element receives a first sensing service request message from an AF or AS, where the first sensing service request message is used to request a first sensing service.

52: The NEF network element selects an appropriate AMF network element based on the first sensing service request message.

Herein, the AMF network element is another example of a target first network element.

In an implementation, if information about a sensing capability of the AMF network element is preconfigured in the NEF network element, the NEF network element may select the appropriate AMF network element based on the preconfigured sensing capability of the AMF network element and the first sensing service request message.

In another implementation, if information about a sensing capability of the AMF is not configured in the NEF network element, the NEF may request an NRF to obtain the AMF network element that supports the first sensing service.

For example, the NEF network element sends a network element discovery request message to the NRF network element, where the network element discovery request message includes network element type information, and the network element type information indicates a network element type requested by the NEF network element. For example, if the NEF network element requests to obtain the AMF network element, the network element type information indicates an AMF network element type.

In addition, the network element discovery request message further includes location information of UE and/or an identifier of a serving AMF of the UE (for example, sensing for the UE), or the network element discovery request message may further include area information (for example, sensing for an area).

Optionally, the network element discovery request message further includes one or more of the following:
a sensing distance, a sensing area, a sensing speed range, a sensing distance resolution, sensing angle measurement precision, a sensing speed resolution, a QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a required RAN node type, a required access type, and a required RAT type.

One or more of the foregoing items included in the network element discovery request message are determined by the NEF network element based on the first sensing service request message. The information may be used by the NRF to determine the AMF network element.

The NEF network element receives a response message that is of the network element discovery request message and that is from the NRF network element, where the response message indicates one or more AMF network elements that support the first sensing service. For example, the response message includes an identifier of the one or more AMFs, that is, an AMF ID or AMF IDs supporting the first sensing service.

The NEF network element selects the appropriate AMF network element based on the AMF ID or the AMF IDs.

As described in step 52, after the NEF network element receives the first sensing service request message, the NEF network element may request the NRF to obtain a first network element (which is specifically the AMF network element) that supports the first sensing service, and the NRF returns one or more first network elements to the NEF network element. The NEF network element selects a target first network element from the one or more first network elements.

In other words, in this embodiment, the "first network element" is the AMF network element, and correspondingly, the target first network element is the AMF network element.

In this embodiment, the network element type information included in the network element discovery request message specifically indicates that a requested network element is of a first network element type. For example, the first network element type is the AMF network element type, in other words, the NEF network element requests to obtain the AMF network element.

53: The NEF network element sends a second sensing service request message to the selected AMF network element.

54: The AMF network element selects an appropriate sensing network element based on the second sensing service request message.

In an implementation, if information about a sensing capability of an SF network element is preconfigured in the AMF network element, the AMF may select, based on the preconfigured sensing capability of the SF network element and the identifier of the UE or the area information, and with reference to a service type, a service requirement, a QoS requirement, and the like of the first sensing service, the sensing network element that supports the first sensing service.

In another implementation, if information about a sensing capability of an SF is not configured in the AMF network element, the AMF may request the NRF to obtain the SF network element that supports the first sensing service.

For example, the AMF network element sends a network element discovery request message to the NRF network element, where the network element discovery request message includes network element type information, and the network element type information indicates a network element type requested by the AMF network element. For example, if the AMF network element requests to obtain the SF network element, the network element type information indicates an SF network element type.

In addition, the network element discovery request message further includes the location information of the UE and/or the identifier of the serving AMF of the UE (for example, sensing for the UE), or the network element discovery request message may further include the area information (for example, sensing for an area).

Optionally, the network element discovery request message further includes one or more of the following:
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, a RAN node type, an access type, and a RAT type.

One or more of the foregoing items included in the network element discovery request message are determined based on the first sensing service request message.

The AMF network element receives a response message that is of the network element discovery request message and that is from the NRF network element, where the response message indicates one or more SF network elements (that is, one or more sensing network elements) that support the first sensing service. For example, the response message includes an identifier of one or more SFs, that is, an SF ID or SF IDs supporting the first sensing service.

The AMF network element selects an appropriate SF network element (that is, the sensing network element) based on the SF ID or SF IDs.

55: The AMF network element sends a third sensing service request message to the selected sensing network element.

56: The sensing network element further selects an appropriate RAN network element based on the third sensing service request message (where this step is optional).

The sensing network element may select the appropriate AMF network element based on the third sensing service request message, and then the AMF network element determines the corresponding RAN network element. Alternatively, the sensing network element may directly select the appropriate RAN network element. Therefore, in step 56, that the sensing network element selects the appropriate RAN network element is an optional implementation.

In addition, after receiving the third sensing service request message from the AMF network element, the sensing network element no longer selects the AMF network element, but uses the AMF network element as a target AMF that delivers a sensing control request. Therefore, in step 56, that the sensing network element selects the appropriate AMF network element is an optional implementation.

For example, the sensing network element may request the NRF network element to obtain a RAN network element that supports the first sensing service.

The sensing network element sends a network element discovery request message to the NRF network element, where the network element discovery request message includes network element type information, and the network element type information indicates a network element type requested by the sensing network element. For example, if the sensing network element requests to obtain the RAN network element, the network element type information indicates a RAN network element type.

In addition, the network element discovery request message further includes the identifier of the UE and/or the identifier of the serving AMF of the UE (for example, sensing for the UE), or the network element discovery request message further includes the area information (for example, sensing for an area).

Optionally, the network element discovery request message further includes one or more of the following:
sensing indication information, the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the RAN node type, the access type, and the RAT type.

The sensing indication information indicates that a network element requested by the network element discovery request message is used to sense a service.

It should be understood that one or more of the foregoing items included in the network element discovery request message are determined based on the third sensing service request message. The information may be used by the NRF to determine the RAN network element.

The sensing network element receives a response message that is of the network element discovery request message and that is from the NRF network element, where the response message indicates one or more RAN network elements that support the first sensing service. For example, the response message includes an identifier of the one or more RAN network elements, that is, a RAN ID or RAN IDs supporting the first sensing service.

The sensing network element selects the appropriate RAN network element based on the RAN ID or RAN IDs.

As described in step 56, after the sensing network element receives the third sensing service request message, the sensing network element may request the NRF to obtain a second network element (which is specifically the RAN network element) that supports the first sensing service, and the NRF returns one or more second network elements to the NEF network element. The NEF network element selects a target second network element from the one or more second network elements.

In other words, in this embodiment, the "second network element" is the RAN network element, and correspondingly, the target second network element is the RAN network element.

In this embodiment, the network element type information included in the network element discovery request message specifically indicates that a requested network element is of a second network element type. For example, the second network element type is the RAN network element type, in other words, the NEF network element requests to obtain the RAN network element.

57: The sensing network element sends a first sensing control request message to the selected RAN network element, to control the RAN network element to perform a sensing operation on the first sensing service.

58: The RAN network element performs the sensing operation based on the first sensing control request message, to obtain first sensing data of the first sensing service.

59: The RAN network element sends the first sensing data to the sensing network element.

Subsequently, the sensing network element provides second sensing data of the first sensing service to the AF/AS by using the NEF network element.

Optionally, the second sensing data is the first sensing data.

Optionally, in the procedure in FIG. 8(c), after receiving the third sensing service request message, the SF directly selects the RAN network element, and sends a sensing control request message to the RAN network element, so that the RAN network element performs the sensing operation. In another implementation, after receiving the third sensing service request message, the SF may further deliver a sensing control request message by using the AMF network element. Specifically, the SF sends a sensing control request message 1 to the AMF network element, and then the AMF determines the corresponding RAN network element, and sends a sensing control request message 2 to the determined RAN network element, so that the RAN network element performs the sensing operation. This is not limited.

Based on the procedure in FIG. 8(c), a 5GS may select an appropriate network element having a sensing capability for the first sensing service, to support the sensing service in an end-to-end manner. Specifically, after receiving the first sensing service request message for requesting the first sensing service, the NEF network element selects the appropriate AMF network element based on the first sensing service request message, and the AMF network element selects the appropriate sensing network element. The sensing network element further selects the appropriate RAN network element (optional), and the selected RAN network element performs the sensing operation on the first sensing service, to select the appropriate network element for the first sensing service.

In the foregoing several implementations, one or more of the NRF network element and a UDM network element/UDR network element may be involved in the network element selection process. Therefore, optionally, the communication system further includes the NRF network element and the UDM network element/UDR network element. These network elements are described in detail in the following embodiments.

2. The UE triggers the sensing service, and the sensing service is specific to the UE.

FIG. 9 is an architectural diagram of another communication system according to this application.

As shown in FIG. 9, the communication system may include an AMF network element, a sensing network element, and a RAN network element.

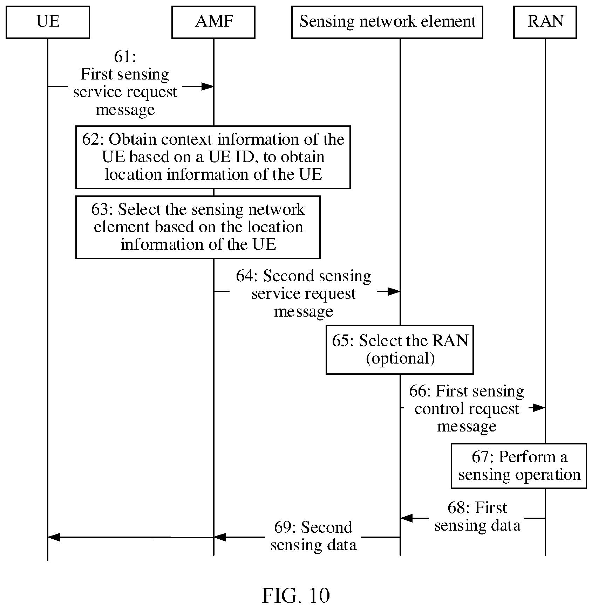

Based on the architecture in FIG. 9, this application provides a procedure of network element selection shown in FIG. 10.

FIG. 10 is a schematic flowchart of another method for selecting a network element according to this application.

61: The AMF network element receives a first sensing service request message, where the first sensing service request message is used to request a first sensing service.

Optionally, the first sensing service request message includes a UE ID. In other words, the first sensing service request message is used to request to sense UE.

If no communication connection is established between the UE and the AMF, the first sensing service request message includes the UE ID. If a communication connection has been established between the UE and the AMF, the first sensing service request message may not include the UE ID, and the UE may be identified by using an endpoint identifier of a signaling connection, for example, an endpoint identifier of a next generation application protocol (next generation application protocol, NGAP) signaling connection between the RAN and the AMF, that is, an AMF UE NGAP ID or a RAN UE NGAP ID. In other words, if the communication connection has been established between the UE and the AMF, the first sensing service request message may include the AMF UE NGAP ID, the RAN UE NGAP ID, or the like.

Optionally, the first sensing service request message may be from the UE, an NEF network element, an AF network element, an AS, or a gateway sensing center (gateway sensing center, GSC).

For example, the UE sends the first sensing service request message to the AMF. Alternatively, the UE sends a sensing service data request message to the AF/AS via an application layer, the AF/AS further sends a sensing service request message 1 to the NEF, and then the NEF sends a sensing service request message 2 (that is, an example of the first sensing service request message) to the AMF network element.

The gateway sensing center may receive a sensing request outside a network, and further send the first sensing service request message to the AMF network element. For example, the gateway sensing center may be a GSC, and receives a sensing request from a sensing demander (for example, a sensing client).

62: Optionally, the AMF network element obtains location information of the UE based on the UE ID.

For example, in an implementation, the AMF network element may obtain context information of the UE based on the UE ID, to obtain the location information of the UE, for example, an ECGI or a tracking area identity (tracking area identity, TAI). The AMF is a serving AMF of the UE. After the UE registers with a network, the AMF generates and stores a UE context for the UE.

In another implementation, the AMF network element may request an LMF to obtain the location information of the UE. For example, the AMF network element may send a location request message to the LMF network element, and the location request message includes the identifier of the UE. The LMF network element initiates positioning of the UE based on the location request message, to obtain a location of the UE. The LMF network element sends a location response message to the AMF network element, where the location response message includes the location information of the UE.

63: The AMF network element selects the sensing network element based on the location information of the UE.

In an implementation, if information about a sensing capability of an SF network element is preconfigured in the AMF network element, the AMF network element may select the sensing network element based on the preconfigured sensing capability of the SF network element and the location information and/or a serving AMF ID of the UE.

In another implementation, if information about a sensing capability of an SF is not configured in the AMF network element, the AMF may request the NRF to obtain the SF network element that supports the first sensing service.

For example, the AMF network element sends a network element discovery request message to the NRF network element, where the network element discovery request message includes network element type information, and the network element type information indicates a requested network element type. For example, if the AMF network element requests to obtain the SF network element, the network element type information indicates an SF network element type.

In addition, the network element discovery request message further includes information about the UE. For example, the information about the UE may be the identifier of the serving AMF of the UE and/or the location information of the UE.

The location information of the UE may be the location information of the UE that is obtained by the AMF network element from the first sensing service request message, or the ECGI or TAI that is obtained by the AMF network element from the UE context, or the location information of the UE that is obtained through requesting by the AMF network element from the LMF network element.

Optionally, the network element discovery request message further includes one or more of the following:
a sensing distance, a sensing area, a sensing speed range, a sensing distance resolution, sensing angle measurement precision, a sensing speed resolution, a QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a required RAN node type, a required access type, and a required RAT type.

It should be understood that one or more of the foregoing items included in the network element discovery request message are determined based on the first sensing service request message.

The AMF network element receives a response message that is of the network element discovery request message and that is from the NRF network element, where the response message indicates one or more SF network elements (that is, one or more sensing network elements) that support the first sensing service. For example, the response message includes an identifier of one or more SFs, that is, an SF ID or SF IDs supporting the first sensing service.

The AMF network element selects an appropriate SF network element (that is, the sensing network element) based on the SF ID or SF IDs.

64: The AMF network element sends a second sensing service request message to the selected sensing network element.

For detailed descriptions of the second sensing service request message, refer to step 33. Details are not described herein again.

65: The sensing network element selects the RAN network element based on the second sensing service request message (where this step is optional).

For descriptions of step 66, refer to step 56. In other words, that the sensing network element selects the RAN network element is merely an optional implementation.

66: The sensing network element sends a first sensing control request message to the selected RAN network element, where the first sensing control request message is used to control the RAN network element to perform a sensing operation on the first sensing service.

67: The RAN network element performs the sensing operation based on the first sensing control request message, to obtain first sensing data of the first sensing service.

68: The RAN network element sends the first sensing data to the sensing network element.

69: The sensing network element provides second sensing data to the UE, the NEF network element, the AF network element, the AS, or the gateway sensing center by using the AMF network element.

In this application, the gateway sensing center (gateway sensing center, GSC) may receive the sensing request from the sensing demander, for example, the sensing client (sensing client), and send the sensing request to the sensing network element SF.

Optionally, the second sensing data is the first sensing data.

Optionally, in the procedure shown in FIG. 10, after receiving the second sensing service request message, the SF directly selects the RAN network element, and sends a sensing control request message to the RAN network element, so that the RAN network element performs the sensing operation. In another implementation, after receiving the second sensing service request message, the SF may further deliver a sensing control request message by using the AMF network element. Specifically, the SF sends a sensing control request message 1 to the AMF network element, and then the AMF determines the corresponding RAN network element, and sends a sensing control request message 2 to the determined RAN network element, so that the RAN network element performs the sensing operation. This is not limited.

In the procedure shown in FIG. 10, the NRF network element may be involved in the network element selection process. Therefore, optionally, the communication system in FIG. 9 further includes the NRF network element. The NRF network element is described in detail in the following embodiments.

The following provides several examples to describe the method for selecting a network element in a communication sensing service provided in this application.

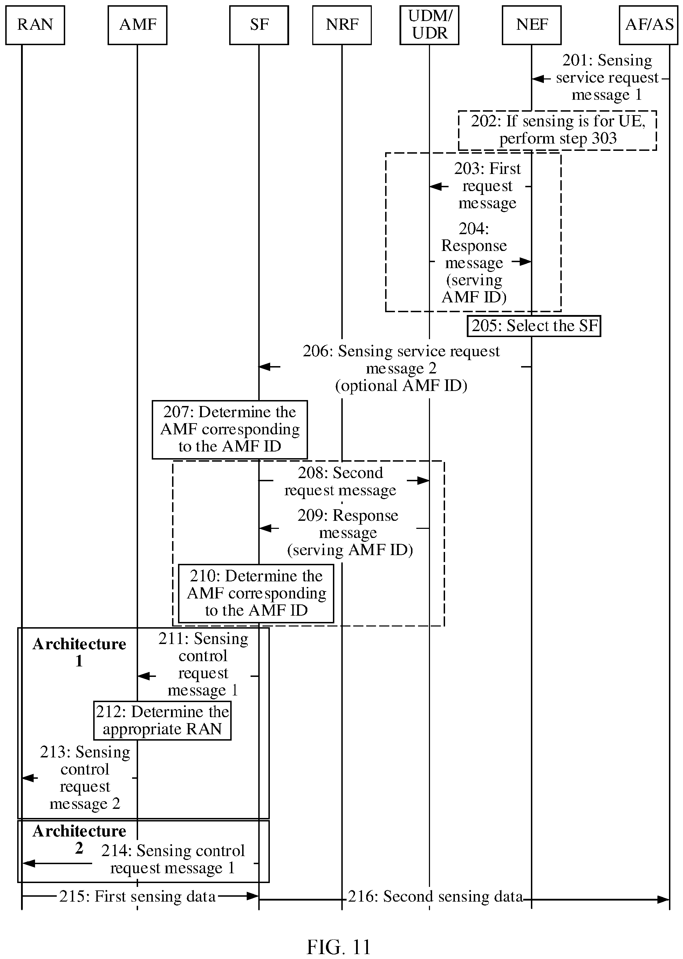

With reference to FIG. 11, the following provides an example of selecting a network element in a sensing service for sensing UE (that is, a sensing service per UE).

FIG. 11 is a schematic flowchart of a method for selecting a network element according to this application.

201: An AF/AS sends a sensing service request message 1 to an NEF.

The sensing service request message is used to request a first sensing service for UE. In other words, the sensing service request message 1 is used to request to sense the UE. The sensing service request message 1 includes an identifier (an external identifier) of the UE.

Optionally, the sensing service request message 1 further includes one or more of the following:
a sensing distance, a sensing area, a sensing speed range, a sensing distance resolution, sensing angle measurement precision, a sensing speed resolution, a QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, and a sensing application identifier.

202: If the NEF determines, based on the sensing service request message 1, that sensing is for the UE, the NEF needs to obtain a serving AMF (that is, a serving AMF) of the UE from a UDM/UDR. Specifically, as shown in the following steps 203 and 204.

203: The NEF sends a first request message to the UDM/UDR, where the first request message is used to request to obtain a serving AMF ID of the UE.

The first request message includes an AMF network element type. The AMF network element type indicates that a requested network element type is the AMF network element type.

Optionally, the first request message further includes the UE ID and/or location information of the UE.

For example, the location information of the UE is obtained by the NEF from a GMLC, or the location information of the UE is obtained by the NEF from the sensing service request message 1.

The UE ID herein is an internal identifier of the UE.

204: The NEF receives a response message from the UDM/UDR. The response message carries the ID of the serving AMF of the UE (denoted as the serving AMF ID below).

Optionally, the first request message may be a Nudm_UECM_Get request, and the response message may be a Nudm_UECM_Get response.

205: The NEF selects an SF.

Specifically, the NEF sends an SF network element discovery request message to an NRF, where the SF network element discovery request message is used to request to obtain an appropriate SF network element.

The SF network element discovery request message includes an SF network element type, and further includes the UE ID and/or the serving AMF ID.

Optionally, the SF network element discovery request message may further include one or more of the following:
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, a RAN node type, an access type, and a RAT type.

Specifically, the SF network element type indicates that a network element type requested by the NEF is the SF network element.

The serving AMF ID is used by the NRF to obtain the appropriate SF network element that supports the first sensing service of the UE. For example, there is a correspondence between the AMF and the SF network element, and a service scope of the SF network element corresponds to one or more service scopes of the AMF, or a service scope of the AMF corresponds to one or more service scopes of the SF network element. In other words, there is a correspondence between an SF ID and an AMF ID. In this case, the NRF may determine a corresponding SF ID or corresponding SF IDs based on the AMF ID in a network element discovery request message.

The service type is used by the NRF to determine an SF network element that supports the service type.

Sensing precision is used by the NRF to determine an SF network element that supports the sensing precision.

Optionally, the SF network element discovery request message may be Nnrf_ NFDiscovery_Request.

The NRF network element determines the appropriate SF network element based on the SF network element discovery request message and a sensing capability that is of the SF network element and that is registered with the NRF, and returns a response message of the SF network element discovery request message to the NEF. The response message carries an identifier of one or more SF network elements that support the first sensing service, denoted as an SF ID or SF IDs below.

Optionally, the response message of the SF network element discovery request message may be Nnrf_ NFDiscoveryResponse.

Optionally, if information about the sensing capability of the SF is preconfigured in the NEF, the NEF does not need to request the NRF to obtain the SF network element.

205: The NEF selects the appropriate SF based on the SF ID or SF IDs returned by the NRF.

206: The NEF sends a sensing service request message 2 to the selected SF.

The sensing service request message 2 may carry the identifier (the internal identifier) of the UE.

Optionally, the sensing service request message 2 further includes one or more of the following:
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, and the sensing application identifier.

Optionally, for per UE sensing, the sensing service request message 2 may further carry the serving AMF ID of the UE and/or the location information of the UE, to prevent the SF from subsequently re-requesting the serving AMF of the UE from the UDM, and also prevent the SF from subsequently re-requesting the GLMC to obtain a location of the UE.

If the sensing service request message 2 carries the serving AMF ID, the SF may directly determine the serving AMF of the UE based on the serving AMF ID, as shown in step 207.

207: The SF determines the corresponding AMF based on the serving AMF ID carried in the sensing service request message 2.

Optionally, if the sensing service request message 2 does not carry the serving AMF ID, the SF needs to request the serving AMF of the UE from the UDM by using steps 208 to 210, and determines the serving AMF of the UE. In other words, steps 208 to 210 are optional steps.

208: The SF sends a second request message to the UDM/UDR, where the second request message carries the identifier of the UE.

It should be understood that the identity of the UE carried in the second request message is obtained by the SF from the sensing service request message 2.

209: The SF receives a response message from the UDM/UDR, where the response message includes the identifier of the serving AMF of the UE, that is, the serving AMF ID.

210: The SF determines the corresponding AMF based on the serving AMF ID.

The AMF determined by the SF is denoted as a first AMF in the following. Herein, the first AMF is also the serving AMF of the UE.

The subsequent processes are different based on the architecture 1 and the architecture 2, which are described below.

Optionally, if the architecture 1 is used, steps 211 to 213 are performed after step 210.

211: The SF sends a sensing control request message 1 to the AMF (that is, the first AMF) determined in step 207 or step 210.

Optionally, the sensing control request message 1 includes the UE ID. For example, if no communication connection is established between the SF and the AMF for the UE, the first sensing service request message includes the UE ID. If a communication connection is established between the SF and the AMF for the UE, the first sensing service request message may not include the UE ID, and the UE may be identified by using an endpoint identifier of a signaling connection between the SF and the AMF.

It should be understood that the UE ID in the sensing control request message 1 or the endpoint identifier of the signaling connection between the SF and the AMF indicates to sense the UE. For example, the UE ID may be a subscription permanent identifier (subscription permanent identifier, SUPI).

Optionally, the sensing control request message 1 may further include one or more of the following:
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, and the sensing application identifier.

212: The AMF determines a corresponding RAN based on the sensing control request message 1.

213: The AMF sends a sensing control request message 2 to the determined RAN.

The sensing control request message 2 includes the UE ID.

Optionally, the sensing control request message 2 may further include one or more of the following:
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, and the sensing application identifier.

In step 212, the AMF may obtain context information of the UE based on the UE ID, to obtain an ID of the RAN in which the UE is located, or even a cell ID of a cell in which the UE is located, to determine the corresponding RAN. Then, the AMF sends the sensing control request message 2 to the determined RAN by using per UE signaling. Alternatively, the AMF may send the sensing control request message 2 to the determined RAN by using node-level signaling (or non-UE signaling). For example, the sensing control request message 2 may be next generation application protocol (next generation application protocol, NGAP) signaling between the RAN and the AMF.

The sensing control request message 2 carries the UE ID. Optionally, the UE ID may be a globally unique temporary identity (globally unique temporary identity, GUTI), a system architecture evolution-temporary mobile subscriber identity (system architecture evolution-temporary mobile subscriber identity, S-TMSI), a next generation application protocol identifier (next generation application protocol identifier, NGAP ID), or a UE ID that is negotiated and allocated by another RAN and the AMF for the UE.

Optionally, if the architecture 2 is used, step 214 is performed after step 211.

214: The AMF sends a sensing control request message 1 to a RAN.

Similar to that in the architecture 1, the AMF obtains context information of the UE based on the UE ID, obtains a RAN ID of the RAN in which the UE is located, or even a cell ID of a cell in which the UE is located, to determine the RAN. Then, the AMF sends the sensing control request message 1 to the RAN by using per UE signaling (for example, NGAP signaling between the RAN and the AMF). Alternatively, the AMF may send the sensing control request message 1 to the RAN by using node-level signaling (or non-UE signaling).

It should be understood that in the architecture 1, the SF sends the sensing control request message 1 to the AMF, and then the AMF sends the sensing control request message 2 to the RAN. In the architecture 2, the SF directly sends the sensing control request message 1 to the RAN. In other words, in the architecture 1, the AMF needs to parse the sensing control request message 1, and then sends the sensing control request message 2 to the RAN.

The RAN performs a sensing operation on the first sensing service of the UE based on the sensing control request message 2 (in the architecture 1) or the sensing control request message 1 (in the architecture 2), to obtain first sensing data of the first sensing service. Subsequently, the RAN provides the first sensing data to the SF, and finally the SF provides sensing service data to the AF/AS.

215: The RAN reports the sensed first sensing data to the SF.

216: The SF returns second sensing data to the AF/AS by using the NEF.

Optionally, the SF obtains the second sensing data based on the first sensing data. Optionally, the SF may not process the first sensing data, in other words, the second sensing data is the first sensing data.

In the procedure shown in FIG. 11, based on a case that the RAN, the AMF, and the SF obtain the sensing capabilities of the RAN, the AMF, and the SF, and register the sensing capabilities with the NRF, after the NEF receives a sensing service request from the AF/AS, the NEF selects the appropriate SF by using the NRF. The SF further selects an appropriate AMF or RAN by using the NRF, so that an appropriate network element having a sensing capability is selected for the sensing service, thereby ensuring that a 5GS supports (or provides) the sensing service in an end-to-end manner.

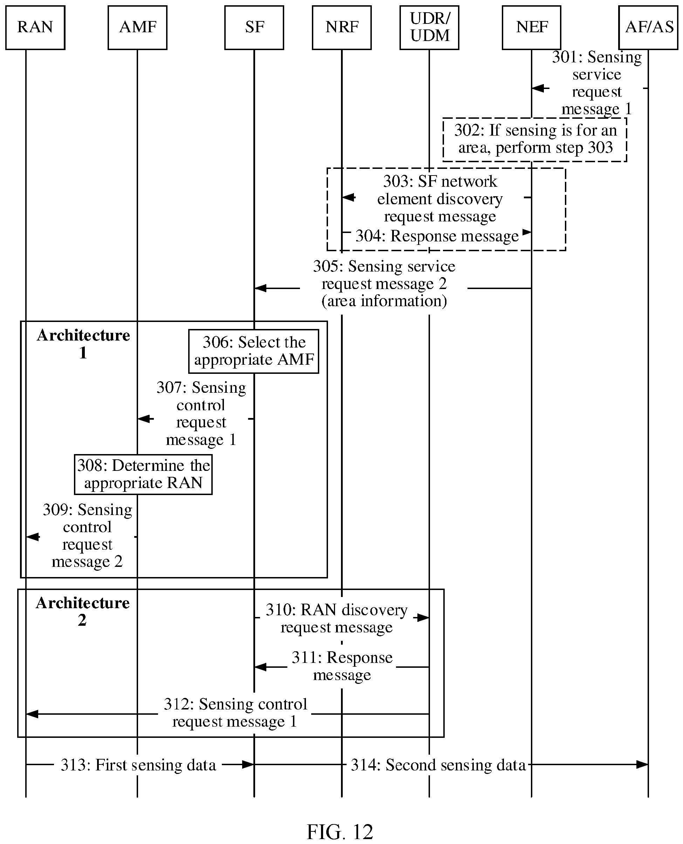

With reference to FIG. 12, the following provides an example of selecting a network element in a sensing service (that is, a sensing service per area) for sensing an area.

FIG. 12 is a schematic flowchart of another method for selecting a network element according to this application.

301: An AF/AS sends a sensing service request message 1 to an NEF.

The sensing service request message 1 is used to request a first sensing service 1. For example, the first sensing service is used to sense an area. The sensing request message 1 includes area information.

Optionally, the sensing service request message 1 further includes one or more of the following:
a sensing distance, a sensing speed range, a sensing distance resolution, sensing angle measurement precision, a sensing speed resolution, a QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, and a sensing application identifier.

302: If the NEF determines, based on the sensing service request message 1, to sense the area, the NEF requests an NRF to obtain an appropriate SF or appropriate SFs, as described in the following steps 303 and 304.

303: The NEF sends an SF network element discovery request message to the NRF, where the SF network element discovery request message is used to request to obtain an appropriate SF network element.

The SF network element discovery request message may carry an SF network element type and the area information.

Optionally, the SF network element discovery request message may further include one or more of the following:
the sensing distance, a sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, a required RAN node type, a required access type, and a required RAT type.

Specifically, the SF network element type indicates that a network element type requested by the NEF is the SF network element.

The area information is used by the NRF to determine an SF network element that can cover the sensing area.

The service type is used by the NRF to determine an SF network element that supports the service type.

Sensing precision is used by the NRF to determine an SF network element that supports the sensing precision.

Optionally, the SF network element discovery request message may be Nnrf_ NFDiscovery_Request.

304: The NRF returns a response message of the SF network element discovery request message to the NEF, where the response message carries an SF ID or SF IDs.

Optionally, the response message in step 304 may be Nnrf_NFDiscovery_Response.

Optionally, if information about a sensing capability of the SF is preconfigured in the NEF, steps 303 and 304 do not need to be performed.

The NEF selects the appropriate SF based on the SF ID or SF IDs returned by the NRF. The SF selected by the NEF is denoted as a first SF in the following. Further, the NEF performs step 305.

305: The NEF sends a sensing service request message 2 to the selected SF (that is, the first SF).

The sensing service request message 2 includes the area information.

Optionally, the sensing service request message 2 further includes one or more of the service type, the service requirement, and the QoS requirement. Optionally, the service requirement may include one or more of the following:
the sensing distance, the sensing speed range, the sensing distance resolution, the sensing angle measurement precision, the sensing speed resolution, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the required RAN node type, the required access type, and the required RAT type.

The subsequent processes are different based on the architecture 1 and the architecture 2, which are described below.

Optionally, if the architecture 1 is used, steps 306 to 309 are performed after step 305.

306: The SF selects an appropriate AMF based on the sensing service request message 2.

Optionally, in an implementation, the SF selects the appropriate AMF (denoted as a first AMF below) based on a list (that is, the foregoing list 2) of sensing capabilities of the SF and information such as the area information, the service type, the service requirement, and the QoS requirement in the sensing service request message 2.

Optionally, in another implementation, the SF may send an AMF network element discovery request message to the NRF, and select an appropriate AMF network element based on an AMF ID or AMF IDs returned by the NRF. For details, refer to the descriptions of step 44 in FIG. 8(b). Details are not described herein again.

307: The SF sends a sensing control request message 1 to the selected first AMF, where the sensing control request message 1 is used to control a RAN to perform a sensing operation on the first sensing service.

The sensing control request message 1 includes the area information. Optionally, the sensing service request message 1 further includes information such as the service type, the service requirement, and the QoS requirement.

308: The first AMF network element determines an appropriate RAN.

309: The first AMF sends a sensing control request message 2 to the determined RAN.

The sensing service request message 2 includes the area information. Optionally, the sensing service request message 2 further includes information such as the service type, the service requirement, and the QoS requirement.

For example, the AMF sends the sensing control request message 2 to the RAN by using node-level signaling (or non-UE signaling).

Optionally, if the architecture 2 is used, steps 310 to 312 are performed after step 305.

310: The SF sends a RAN discovery request message to the NRF.

The RAN discovery request message is used to request to obtain a RAN that supports the first sensing service. Optionally, the RAN discovery request message may further include one or more of the following:
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, and the service type, the required RAN node type, the required access type, and the required RAT type.

311: The SF receives a response message of the RAN discovery request message from the NRF, where the response message includes an identifier of one or more RANs, denoted as a RAN ID or RAN IDs below.

The SF selects an appropriate RAN (denoted as a first RAN below) from the RAN ID or RAN IDs returned by the NRF. The SF performs step 312.

Steps 310 and 311 are optional steps. When a RAN having a sensing capability registers the sensing capability of the RAN with the NRF, the SF may request to obtain the RAN network element based on steps 310 and 311.

312: The SF sends a sensing control request message 1 to the first RAN.

The sensing control request message 1 includes the area information. Optionally, the sensing service request message 1 further includes information such as the service type, the service requirement, and the QoS requirement.

The RAN performs a sensing operation, obtains first sensing data of the first sensing service, and provides the first sensing data to the SF. The SF provides sensing service data to the AF/AS, as described in steps 313 and 314.

313: The RAN reports the sensed first sensing data to the SF.

314: The SF returns second sensing data to the AF/AS by using the NEF.

Optionally, the SF obtains the second sensing data based on the first sensing data. Optionally, the SF may not process the first sensing data, in other words, the second sensing data is the first sensing data.

In the procedure shown in FIG. 12, based on a case that the RAN, the AMF, and the SF obtain the sensing capabilities of the RAN, the AMF, and the SF, and register the sensing capabilities with the NRF, after the NEF receives a sensing service request from the AF/AS, the NEF selects the appropriate SF by using the NRF. The SF further selects an appropriate AMF or RAN by using the NRF, so that an appropriate network element having a sensing capability is selected for the sensing service, thereby ensuring that a 5GS supports the sensing service in an end-to-end manner.

FIG. 11 and FIG. 12 each provide an example in which the NEF selects the SF by using the NRF, and the SF further selects the RAN or the AMF by using the NRF to support the sensing service requested by the AF/AS.

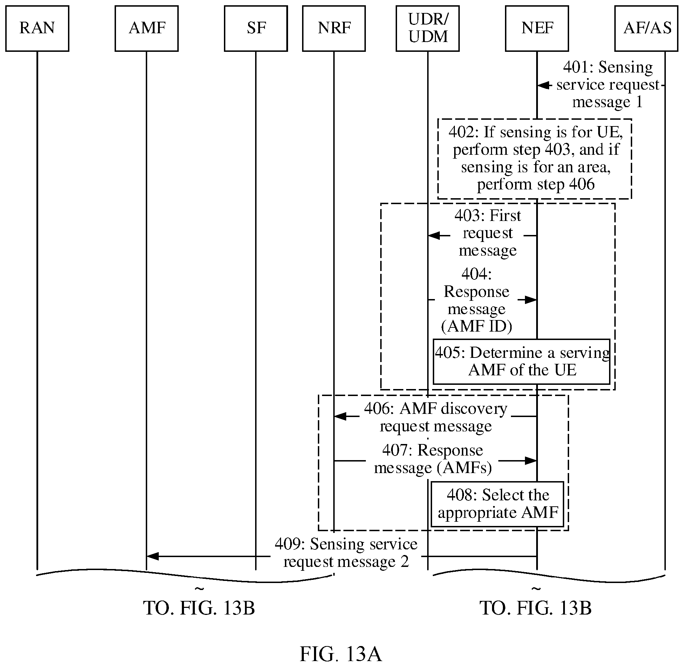

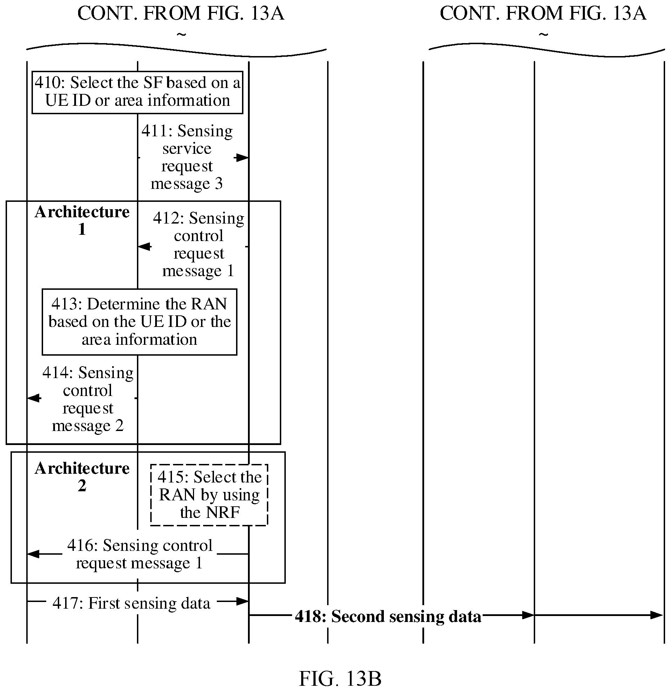

The following provides another example with reference to FIG. 13A and FIG. 13B. To be specific, an NEF selects an AMF by using an NRF, the AMF further selects an SF by using the NRF, and then an SF selects an AMF or a RAN to provide a sensing service.

FIG. 13A and FIG. 13B are a schematic flowchart of another method for selecting a network element according to this application.

401: An AF/AS sends a sensing service request message 1 to an NEF.

Optionally, the sensing service request message 1 may include a UE ID (sensing for UE), or the sensing service request message 1 may include area information (sensing for an area). Optionally, the UE ID may be an external identifier, for example, a generic public subscription identifier (generic public subscription identifier, GPSI).

Optionally, the sensing service request message 1 may further include one or more of a service type, a service requirement, and a QoS requirement. Optionally, the service requirement may include one or more of the following:
a sensing distance, a sensing speed range, a sensing distance resolution, sensing angle measurement precision, a sensing speed resolution, sensing object identification accuracy, a false alarm rate of sensing object identification, sensing data precision, a sensing data update frequency, a sensing dimension, a sensing feedback manner, the service type, a sensing requester type, a sensing requester identifier, a sensing application type, a sensing application identifier, a required RAN node type, a required access type, and a required RAT type.

402: The NEF performs steps 403 to 405 based on the sensing service request message 1 if determining that sensing is for the UE. The NEF performs steps 406 to 408 if determining that sensing is for the area.

403: The NEF sends a first request message to a UDM/UDR, where the first request message is used to request to obtain a serving AMF ID of the UE.

The first request message includes the UE ID and an AMF network element type. The AMF network element type indicates that a network element type requested by the NEF is the AMF network element type.

404: The NEF receives a response message from the UDM/UDR. The response message carries the serving AMF ID of the UE.

Optionally, the first request message may be a Nudm_UECM_Get request, and the response message may be a Nudm_UECM_Get response.

405: The NEF determines a corresponding AMF (that is, a serving AMF of the UE) based on the serving AMF ID of the UE.

406: The NEF sends an AMF network element discovery request message to an NRF, where the AMF network element discovery request message is used to request to obtain an appropriate AMF network element.

The AMF network element discovery request message may carry the AMF network element type. Optionally, the AMF network element discovery request message may further include one or more of the following:
the sensing distance, a sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, a required RAN node type, a required access type, and a required RAT type.

Specifically, the AMF network element type indicates that a network element type requested by the NEF is the AMF network element.

Optionally, the AMF network element discovery request message may be Nnrf_NFDiscovery_Request.

407: The NRF returns a response message of the AMF network element discovery request message to the NEF, where the response message carries an AMF ID or AMF IDs.

Optionally, the response message in step 406 may be Nnrf_NFDiscovery_Response.

408: The NEF selects the appropriate AMF based on the AMF ID or the AMF IDs returned by the NRF.

After step 405 or step 408, the NEF performs step 409.

409: The NEF sends a sensing service request message 2 to the selected AMF.

Optionally, the sensing service request message 2 may carry the identifier of the UE or the area information.

It should be understood that the information about the UE or the area information included in the sensing service request message 2 is determined based on the sensing service request message 1, and specifically, is determined based on the identifier of the UE or the area information included in the sensing service request message 1. Optionally, the identifier of the UE included in the sensing service request message 2 is an internal identifier.

Optionally, the sensing service request message 2 further includes one or more of the following:
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, and the sensing application identifier.

410: The AMF selects an appropriate SF based on the UE ID or the area information.

Optionally, for sensing for the UE, the AMF obtains context information of the UE based on the UE ID carried in the sensing service request message 2, to obtain location information of the UE, for example, a cell ID or a TAI. Further, the AMF selects the appropriate SF based on a sensing capability list 1 (that is, the foregoing list 1), the location information of the UE, and information such as the service type, the service requirement, and the QoS requirement that are carried in the sensing service request message 2.

Optionally, for area sensing, the AMF selects the appropriate SF based on a sensing capability list 1 (that is, the foregoing list 1) and the information such as the area information, the service type, the service requirement, and the QoS requirement that are carried in the sensing service request message 2.

Optionally, in another implementation, the AMF may request an SF or SFs from the NRF, and select an appropriate SF from one or more SFs returned by the NRF. Details are not described herein again.

411: The AMF sends a sensing service request message 3 to the selected SF.

It should be understood that the sensing service request message 3 is determined based on the sensing service request message 2.

Optionally, the sensing service request message 3 may carry the identifier (for example, the internal identifier) of the UE or the area information.

Optionally, the sensing service request message 3 further includes one or more of the following:
the sensing distance, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, and the sensing application identifier.

### Architecture 1

412: The SF sends a sensing control request message 1 to the selected AMF in step 405 or 408.

The sensing control request message 1 is used to control a RAN network element to perform a sensing operation. Optionally, the sensing control request message 1 may carry the UE ID (the sensing for the UE) or the area information (the sensing for the area).

The UE ID indicates the RAN to sense the UE, and the area information indicates the RAN to sense the area.

413: The AMF determines the RAN based on the UE ID or the area information.

414: The AMF sends a sensing control request message 2 to the determined RAN.

### Architecture 2

Optionally, when step 26 exists in the architecture 2, the SF performs step 415.

415: The SF selects an appropriate RAN by using the NRF.

For example, the SF may select the appropriate RAN by using the NRF. Details are not described herein again.

416: The SF sends a sensing control request message 1 to the selected RAN.

The RAN performs sensing based on the sensing control request message 1 (in the architecture 2) or the sensing control request message 2 (in the architecture 1), to obtain first sensing data.

417: The RAN reports the sensed first sensing data to the SF.

418: The SF returns second sensing data to the AF/AS by using the NEF.

Optionally, the second sensing data may be obtained based on the first sensing data, or the second sensing data is the first sensing data.

In the procedure shown in FIG. 13A and FIG. 13B, based on a case that the RAN, the AMF, and the SF obtain the sensing capabilities of the RAN, the AMF, and the SF, and register the sensing capabilities with the NRF, after the NEF receives a sensing service request from the AF/AS, the NEF first selects the appropriate AMF by using the NRF. The AMF further selects the appropriate SF by using the NRF, and the SF selects the RAN by using the NRF (this is optional), so that an appropriate network element having a sensing capability is selected for the sensing service, thereby ensuring that a 5GS supports the sensing service in an end-to-end manner.

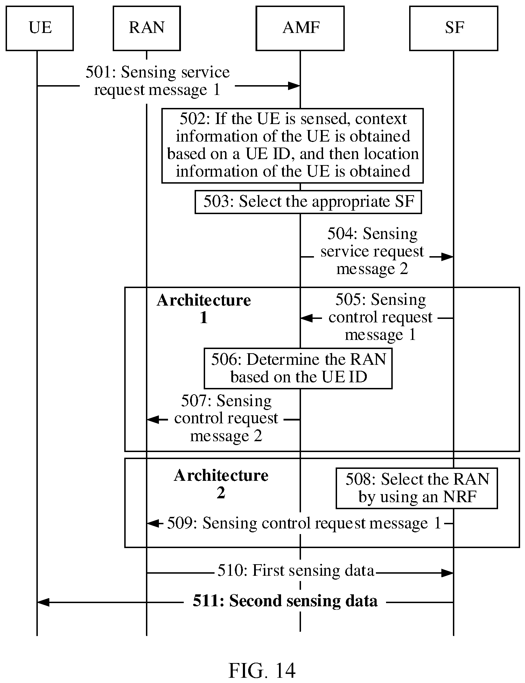

With reference to FIG. 14, the following provides an example in which UE requests a sensing service by using an AMF.

FIG. 14 is a schematic flowchart of another method for selecting a network element according to this application.

501: The AMF receives a sensing service request message 1 from the UE.

The sensing service request message 1 includes a UE ID.

Optionally, the sensing service request message 1 may further include one or more of the following:
a sensing distance, a sensing area, a sensing speed range, a sensing distance resolution, sensing angle measurement precision, a sensing speed resolution, a QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, and a sensing application identifier.

502: If the AMF determines, based on the sensing service request message 1, to sense the UE, the AMF obtains context information of the UE based on the UE ID, to obtain location information of the UE.

503: The AMF selects an appropriate SF based on the location information of the UE, the service type, a service requirement, and the QoS requirement that are carried in the sensing service request message 1.

For example, the AMF may select the SF by using an NRF. Details are not described herein again.

504: The AMF sends a sensing service request message 2 to the selected SF.

The sensing service request message 2 carries the UE ID. Optionally, the sensing service request message 2 may further carry one or more of the service type, the service requirement, and the QoS requirement.

For steps 505 to 511, refer to steps 412 to 418 in FIG. 13B. Details are not described herein again.

In comparison with the procedure in FIG. 13A and FIG. 13B, the AMF in FIG. 14 receives the sensing service request message from the UE, while the AMF in FIG. 13A and FIG. 13B receives the sensing service request message from the NEF.

In the procedure in FIG. 14, based on a case that the RAN, the AMF, and the SF obtain sensing capabilities of the RAN, the AMF, and the SF, and register the sensing capabilities with the NRF, the AMF receives the sensing service request message from the UE, and selects the appropriate SF by using the NRF. The SF further selects the RAN or the AMF by using the NRF, so that an appropriate network element having a sensing capability is selected for the sensing service, thereby ensuring that a 5GS successfully executes the sensing service.

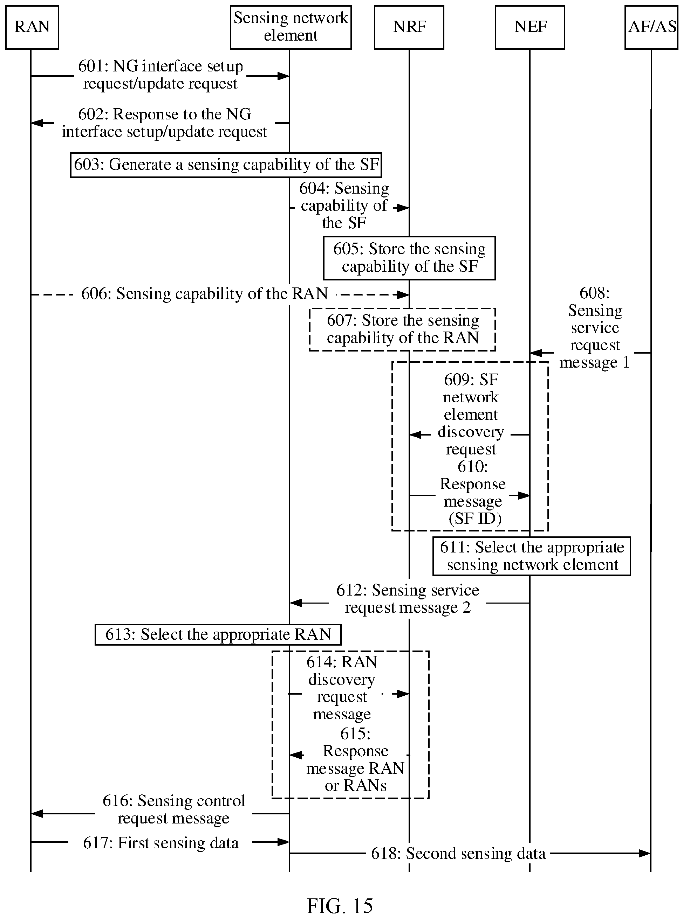

The following further provides an example of area sensing, as shown in a procedure in FIG. 15.

FIG. 15 is a schematic flowchart of another method for selecting a network element according to this application.

601 to 607: AMF, RAN, and SF network elements register sensing capabilities of the AMF, the RAN, and the SF network elements with an NRF.

For steps 601 to 607, refer to steps 21 to 27 in FIG. 6. Details are not described herein again.

608: An AF/AS sends a sensing service request message 1 to an NEF.

The sensing service request message 1 includes area information. Optionally, the sensing service request message 1 further includes one or more of a service type, a service requirement, a QoS requirement, and the like.

609: The NEF sends an SF network element discovery request message to the NRF, where the SF network element discovery request message is used to request to obtain an appropriate SF network element.

The SF network element discovery request message may carry an SF network element type. Optionally, the SF network element discovery request message may further include one or more of the following:
a sensing distance, a sensing area, a sensing speed range, a sensing distance resolution, sensing angle measurement precision, a sensing speed resolution, the QoS requirement, sensing object identification accuracy, a false alarm rate of sensing object identification, sensing data precision, a sensing data update frequency, a sensing dimension, a sensing feedback manner, the service type, a sensing requester type, a sensing requester identifier, a sensing application type, a sensing application identifier, a required RAN node type, a required access type, and a required RAT type.

Specifically, the SF network element type indicates that a network element type requested by the NEF is the SF network element.

Optionally, the SF network element discovery request message may be Nnrf_NFDiscovery_Request.

610: The NRF returns a response message of the SF network element discovery request message to the NEF, where the response message carries an SF ID or SF IDs.

Optionally, for area sensing, if information about the sensing capability of the SF is preconfigured in the NEF, steps 609 and 610 do not need to be performed.

611: The NEF selects the appropriate SF.

612: The NEF sends a sensing service request message 2 to the selected SF.

The sensing service request message 2 may include the area information. Optionally, the sensing service request message 2 further includes one or more of the service type, the service requirement, and the QoS requirement.

613: Optionally, for area sensing, the SF selects the appropriate RAN based on a sensing capability list 2 (that is, the foregoing list 2) and the area information, the service type, the service requirement, and the QoS requirement that are carried in the sensing service request message 2.

In another implementation of step 613 in which the SF selects the appropriate RAN, the SF may select the RAN by using the NRF, as shown in steps 614 and 615.

614 and 615: Optionally, the SF may send a RAN discovery request message to the NRF, to request a RAN or RANs supporting a first sensing service. The NRF returns one or more RANs that support the first sensing service to the SF. The SF selects the appropriate RAN from the one or more RANs.

616: The SF sends a sensing control request message 1 to the selected RAN.

617: The RAN reports sensed first sensing data to the SF.

618: The SF returns second sensing data to the AF/AS by using the NEF.

Optionally, the second sensing data may be obtained based on the first sensing data, or the second sensing data is the first sensing data.

In the procedure provided in this embodiment, based on a case that the RAN, the AMF, and the SF obtain the sensing capabilities of the RAN, the AMF, and the SF, and register the sensing capabilities with the NRF, the NEF selects the appropriate SF by using the NRF based on a sensing service request message that is for requesting to sense an area and that is from the AF. The SF then selects the RAN by using the NRF to select a network element having a sensing capability for the sensing service, to ensure that a 5GS successfully executes the sensing service.

It should be understood that, the foregoing embodiments in which a network element supporting the first sensing service is obtained through requesting by using the NRF are implemented based on a case that the RAN network element, the AMF network element, and/or the SF network element (that is, the third network element) register the sensing capabilities of the RAN network element, the AMF network element, and/or the SF network element with the NRF network element. If the third network element does not register the sensing capability of the third network element with the NRF network element, in these embodiments, a process of registering the sensing capability of the third network element in FIG. 5 or FIG. 6 may be first performed. This is not limited.

The foregoing describes in detail the method for selecting a network element in a communication sensing service provided in this application. The following describes a communication apparatus provided in this application.

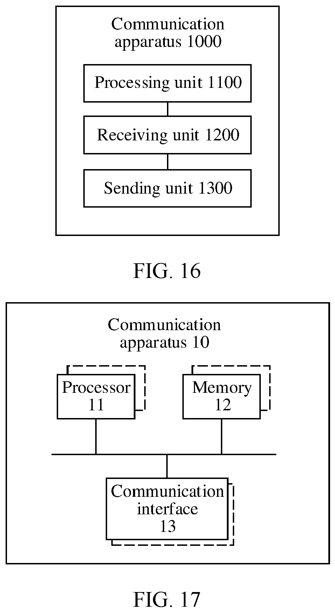

FIG. 16 is a schematic block diagram of a communication apparatus according to this application. As shown in FIG. 16, a communication apparatus 1000 includes a processing unit 1100, a receiving unit 1200, and a sending unit 1300.

Optionally, the communication apparatus 1000 may correspond to the NEF network element in embodiments of this application.

In this case, the units of the communication apparatus 1000 are configured to implement the following functions:
The receiving unit 1200 is configured to receive a first sensing service request message from an application function AF network element, where the first sensing service request message is used to request a first sensing service.

The sending unit 1300 is configured to send a second sensing service request message to a target first network element, where the second sensing service request message is used to request the first sensing service, and the target first network element supports the first sensing service.

Optionally, in an embodiment, the processing unit 1100 is configured to select the target first network element.

Optionally, in an embodiment, the sending unit 1300 is configured to send a network element discovery request message to a network repository function NRF network element, where the network element discovery request message is used to request to obtain a first network element that supports the first sensing service.

The receiving unit 1200 is configured to receive a response message of the network element discovery request message, where the response message indicates one or more first network elements that support the first sensing service.

The processing unit 1100 is configured to select the target first network element from the one or more first network elements.

Optionally, in an embodiment, the network element discovery request message includes network element type information and area information, the network element type information indicates a first network element type, and the area information indicates a sensing area.

Alternatively, the network element discovery request message includes network element type information and information about UE, and the network element type information indicates a first network element type.

Optionally, in an embodiment, the network element discovery request message further includes one or more of the following:
sensing indication information, a sensing distance, the sensing area, a sensing speed range, a sensing distance resolution, sensing angle measurement precision, a sensing speed resolution, a sensing quality of service QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a radio access network RAN network element type, an access type, and a radio access technology RAT type;

The sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the RAN network element type, the access type, and the RAT type are determined based on the first sensing service request message.

The sensing indication information indicates that a network element requested by the network element discovery request message is used to sense a service.

Optionally, in an embodiment, the first network element is an AMF network element, and the target first network element is a target AMF network element; or the first network element is an SF network element, and the target first network element is a target SF network element.

Optionally, in an embodiment, the first network element is the SF network element, and correspondingly, the target first network element is the SF network element.

The information about the UE is location information of the UE and/or an identifier of a serving AMF of the UE.

The location information of the UE is obtained by the NEF network element from the first sensing service request message, or is obtained by the NEF network element from a gateway mobile location center GMLC network element, or is obtained by the NEF network element from the AMF network element.

Optionally, in an embodiment, the first network element is the SF network element, the target first network element is the target SF network element, and the second sensing service request message includes the identifier of the serving AMF of the UE and/or the location information of the UE.

In the foregoing implementations, the receiving unit 1200 and the sending unit 1300 may also be integrated into one transceiver unit, and have both of a receiving function and a sending function. This is not limited herein.

In the embodiments in which the communication apparatus 1000 corresponds to the NEF sensing network element, the processing unit 1100 is configured to perform processing and/or an operation implemented internally by the NEF network element in addition to sending and receiving operations. The receiving unit 1200 is configured to perform a receiving action, and the sending unit 1300 is configured to perform a sending action.

Optionally, the communication apparatus 1000 may correspond to the sensing network element (or the SF network element) in embodiments of this application.

In this case, the units of the communication apparatus 1000 are configured to implement the following functions:
The receiving unit 1200 is configured to receive a first sensing service request message from a first network element, where the first sensing service request message is used to request a first sensing service.

The processing unit 1100 is configured to select a target second network element that supports the first sensing service.

The sending unit 1300 is configured to send a first sensing control request message to the target second network element, where the first sensing control request message is used to control a RAN network element to perform a sensing operation on the first sensing service.

Optionally, in an embodiment, the first network element is an NEF network element, an AMF network element, an application function AF network element, an application server AS, or a gateway sensing center.

Optionally, in an embodiment, the target second network element is the AMF network element or the RAN network element.

Optionally, in an embodiment, the sending unit 1300 is configured to send a network element discovery request message to a network repository function NRF network element, where the network element discovery request message is used to request to obtain a second network element that supports the first sensing service.

The receiving unit 1200 is configured to receive a response message from the NRF network element, where the response message indicates one or more second network elements that support the first sensing service.

The processing unit 1100 is configured to select the target second network element from the one or more second network elements.

Optionally, in an embodiment, the network element discovery request message includes network element type information and area information, the network element type information indicates a second network element type, and the area information indicates a sensing area.

Alternatively, the network element discovery request message includes network element type information and information about UE, and the network element type information indicates a second network element type.

Optionally, in an embodiment, the information of the UE includes the location information of the UE, and the location information of the UE is obtained by the SF network element from the first sensing service request message, or is obtained by the SF network element from the AMF network element, or is obtained by the SF network element from a gateway mobile location center GMLC network element.

Optionally, in an embodiment, the network element discovery request message further includes one or more of the following information:
sensing indication information, a sensing distance, a sensing speed range, a sensing distance resolution, sensing angle measurement precision, a sensing speed resolution, a sensing quality of service QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a radio access network RAN network element type, an access type, and a radio access technology RAT type.

The sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the RAN network element type, the access type, and the RAT type are determined based on the first sensing service request message.

The sensing indication information indicates that a network element requested by the network element discovery request message is used to sense a service.

Optionally, in an embodiment, the sending unit 1300 is configured to send a sensing capability registration request message to the network repository function NRF network element, where the sensing capability registration request message is used to request to register a sensing capability of the SF network element with the NRF network element.

Optionally, in an embodiment, the receiving unit 1200 is configured to receive a sensing capability of one or more RAN network elements that is reported by the one or more RAN network elements; or receive a sensing capability of one or more AMF network elements that is reported by the one or more AMF network elements.

The processing unit 1100 is configured to obtain the sensing capability of the SF network element based on the sensing capability of the one or more RAN network elements or based on the sensing capability of the one or more AMF network elements.

Optionally, in an embodiment, the sensing capability registration request message includes one or more of the following:
the sensing distance, the sensing area, the sensing speed range, the sensing distance resolution, the sensing angle measurement precision, the sensing speed resolution, the sensing quality of service QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the radio access network RAN network element type, the access type, and the radio access technology RAT type.

Optionally, in an embodiment, the sending unit 1300 is configured to send a second request message to a unified data management UDM, where the second request message is used to request to obtain a serving AMF of the UE.

The receiving unit 1200 is configured to receive a response message from the UDM, where the response message includes an identifier of the serving AMF of the UE.

Optionally, in an embodiment, the first sensing service request message does not include the identifier of the serving AMF of the UE.

In the foregoing implementations, the receiving unit 1200 and the sending unit 1300 may also be integrated into one transceiver unit, and have both of a receiving function and a sending function. This is not limited herein.

In the embodiments in which the communication apparatus 1000 corresponds to the SF sensing network element, the processing unit 1100 is configured to perform processing and/or an operation implemented internally by the SF network element in addition to sending and receiving operations. The receiving unit 1200 is configured to perform a receiving action, and the sending unit 1300 is configured to perform a sending action.

Optionally, the communication apparatus 1000 may correspond to the AMF network element in embodiments of this application.

In this case, the units of the communication apparatus 1000 are configured to implement the following functions:

The receiving unit 1200 is configured to receive a first sensing service request message, where the first sensing service request message is used to request a first sensing service.

The processing unit 1100 is configured to select a first SF network element that supports the first sensing service.

The sending unit 1300 is configured to send a second sensing service request message to the first SF network element, where the second sensing service request message is used to request the first sensing service.

Optionally, in an embodiment, the sending unit 1300 is configured to send an SF network element discovery request message to a network repository function NRF network element, where the SF network element discovery request message is used to request to obtain an SF network element that supports the first sensing service.

The receiving unit 1200 is configured to receive a response message from the NRF network element, where the response message includes one or more SF network elements that support the first sensing service.

The processing unit 1100 is configured to select the first SF network element from the one or more SF network elements.

Optionally, in an embodiment, the SF network element discovery request message includes network element type information and information about UE, and the network element type information indicates a third network element type.

Alternatively, the SF network element discovery request message includes network element type information and area information, the network element type information indicates a third network element type, and the area information indicates a sensing area.

Optionally, in an embodiment, the SF network element discovery request message further includes one or more of the following information:
sensing indication information, a sensing distance, a sensing speed range, a sensing distance resolution, sensing angle measurement precision, a sensing speed resolution, a sensing quality of service QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a radio access network RAN network element type, an access type, and a radio access technology RAT type.

The sensing distance, the sensing area, the sensing speed range, the sensing distance resolution, the sensing angle measurement precision, the sensing speed resolution, the sensing quality of service QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the radio access network RAN network element type, the access type, and the radio access technology RAT type are determined based on the first sensing service request message.

The sensing indication information indicates that a network element requested by the network element discovery request message is used to sense a service.

Optionally, in an embodiment, the information about the UE is an identifier of a serving AMF of the UE and/or location information of the UE.

The location information of the UE is obtained by the AMF network element from the first sensing service request message or a location management function LMF network element.

Optionally, in an embodiment, the receiving unit 1200 is configured to receive a first sensing control request message from the first SF network element, where the first sensing control request message is used to control a first RAN network element to perform a sensing operation on the first sensing service.

Optionally, in an embodiment, the sending unit 1300 is configured to send a second sensing control request message to the first RAN network element, where the second sensing control request message is used to control the first RAN network element to perform the sensing operation on the first sensing service.

Optionally, in an embodiment, the sending unit 1300 is configured to send a sensing capability registration request message to the network repository function NRF network element, where the sensing capability registration request message is used to request to register a sensing capability of the AMF network element with the NRF network element.

Optionally, in an embodiment, the receiving unit 1200 is configured to receive a sensing capability of one or more RAN network elements that is reported by the one or more RAN network elements.

The processing unit 1100 is configured to obtain the sensing capability of the AMF network element based on the sensing capability of the one or more RAN network elements.

Optionally, in an embodiment, the sensing capability registration request message further includes one or more of the following information:
the sensing distance, the sensing area, the sensing speed range, the sensing distance resolution, the sensing angle measurement precision, the sensing speed resolution, the sensing quality of service QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the radio access network RAN network element type, the access type, and the radio access technology RAT type.

Optionally, in an embodiment, the first sensing service request message is from an NEF network element, the UE, an AF, an AS, or a gateway sensing center.

In the embodiments in which the communication apparatus 1000 corresponds to the AMF sensing network element, the processing unit 1100 is configured to perform processing and/or an operation implemented internally by the AMF network element in addition to sending and receiving operations. The receiving unit 1200 is configured to perform a receiving action, and the sending unit 1300 is configured to perform a sending action.

Optionally, the communication apparatus 1000 may correspond to the RAN network element in embodiments of this application.

In this case, the units of the communication apparatus 1000 are configured to implement the following functions:
The processing unit 1100 is configured to obtain a sensing capability of the RAN network element.

The sending unit 1300 is configured to register a sensing capability of the RAN network element with an NRF network element; or report the sensing capability of the RAN network element.

Optionally, in an embodiment, the sending unit 1300 is configured to report the sensing capability of the RAN network element to the AMF network element; or report the sensing capability of the RAN network element to an SF network element.

Optionally, in an embodiment, the sending unit 1300 is configured to send a sensing capability registration request message to the NRF network element, where the sensing capability registration request message is used to request to register the sensing capability of the RAN network element with the NRF network element.

Optionally, in an embodiment, the sensing capability of the RAN network element includes one or more of the following:
a sensing distance, a sensing area, a sensing speed range, a sensing distance resolution, sensing angle measurement precision, a sensing speed resolution, a QoS requirement, sensing object identification accuracy, a false alarm rate of sensing object identification, sensing data precision, a sensing data update frequency, a sensing dimension, a sensing feedback manner, and a service type.

In the embodiments in which the communication apparatus 1000 corresponds to the RAN sensing network element, the processing unit 1100 is configured to perform processing and/or an operation implemented internally by the RAN network element in addition to sending and receiving operations. The receiving unit 1200 is configured to perform a receiving action, and the sending unit 1300 is configured to perform a sending action.

Optionally, the communication apparatus 1000 may correspond to the NRF network element in embodiments of this application.

In this case, the units of the communication apparatus 1000 are configured to implement the following functions:
The receiving unit 1200 is configured to receive a sensing capability registration request message from a third network element, where the sensing capability registration request message is used to request to register a sensing capability of the third network element with the NRF network element. The third network element is one or more of a RAN network element, an AMF network element, and an SF network element.

The processing unit 1100 is configured to store the sensing capability of the third network element.

Optionally, in an embodiment, the sensing capability registration message includes one or more of the following:
a sensing distance, a sensing area, a sensing speed range, a sensing distance resolution, sensing angle measurement precision, a sensing speed resolution, a sensing quality of service QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, and a sensing application identifier.

Optionally, in an embodiment, the receiving unit 1200 is configured to receive a network element discovery request message from a fourth network element, where the network element discovery request message is used to request to obtain the third network element that supports a first sensing service, the network element discovery request message includes network element type information, and the network element type information indicates a third network element type.

The sending unit 1300 is configured to return a response message of the network element discovery request message to the fourth network element based on the sensing capability that is of the third network element and that is stored by the processing unit 1100 and the network element discovery request message, where the response message indicates an identifier of one or more third network elements that support the first sensing service.

When the fourth network element is an NEF network element, the third network element is an AMF network element or an SF network element.

Alternatively, when the fourth network element is an AMF network element, the third network element is a RAN network element or an SF network element.

Alternatively, when the fourth network element is an SF network element, the third network element is an AMF network element or a RAN network element.

Optionally, in an embodiment, the network element discovery request message includes one or more of the following information:
sensing indication information, the sensing distance, the sensing area, the sensing speed range, the sensing distance resolution, sensing angle measurement precision, the sensing speed resolution, the sensing quality of service QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, and the sensing application identifier.

The sensing indication information indicates that a network element requested by the network element discovery request message is used to sense a service.

In the embodiments in which the communication apparatus 1000 corresponds to the NRF network element, the processing unit 1100 is configured to perform processing and/or an operation implemented internally by the NRF network element in addition to sending and receiving operations. The receiving unit 1200 is configured to perform a receiving action, and the sending unit 1300 is configured to perform a sending action.

Optionally, the communication apparatus 1000 may correspond to the UDM network element in embodiments of this application.

In this case, the units of the communication apparatus 1000 are configured to implement the following functions:
The receiving unit 1200 is configured to receive a request message from an NEF network element or an SF network element, where the request message is used to request to obtain a serving AMF of UE, and the request message includes information about the UE.

The sending unit 1300 is configured to return a response message of the request message to the NEF network element based on the request message, where the response message includes an identifier of the serving AMF network element of the UE.

In the embodiments in which the communication apparatus 1000 corresponds to the UDM network element, the processing unit 1100 is configured to perform processing and/or an operation implemented internally by the UDM network element in addition to sending and receiving operations. The receiving unit 1200 is configured to perform a receiving action, and the sending unit 1300 is configured to perform a sending action.

FIG. 17 is a schematic diagram of a structure of a communication apparatus according to this application. As shown in FIG. 17, the communication apparatus 10 includes one or more processors 11, one or more memories 12, and one or more communication interfaces 13. The processor 11 is configured to control the communication interface 13 to receive and send a signal. The memory 12 is configured to store a computer program. The processor 11 is configured to invoke the computer program from the memory 12 and run the computer program, so that the communication apparatus 10 performs processing performed by a corresponding network element (for example, the NEF network element, the sensing network element, the AMF network element, the RAN network element, the NRF network element, or the UDM network element) in the method embodiments of this application.

For example, the processor 11 may have a function of the processing unit 1100 shown in FIG. 11, and the communication interface 13 may have a function of the receiving unit 1200 and/or the sending unit 1300 shown in FIG. 11. Specifically, the processor 11 may be configured to perform processing or an operation performed inside a corresponding network element, and the communication interface 13 is configured to perform sending and/or receiving operations performed by a corresponding network element.

In an implementation, the communication apparatus 10 may be a corresponding network element in the method embodiments. In this implementation, the communication interface 13 may be a transceiver. The transceiver may include a receiver and/or a transmitter. Optionally, the processor 11 may be a baseband apparatus, and the communication interface 13 may be a radio frequency apparatus.

In another implementation, the communication apparatus 10 may be a chip (or a chip system) installed in the corresponding network element. In this implementation, the communication interface 13 may be an interface circuit or an input/output interface.

In FIG. 17, a dashed box behind a component (for example, a processor, a memory, or a communication interface) indicates that there may be more than one component.

Optionally, the memory and the processor in the foregoing apparatus embodiments may be physically independent units, or the memory and the processor may be integrated together. This is not limited herein.

It should be understood that the "corresponding network element" is any one of the NEF network element, the sensing network element, the AMF network element, the RAN network element, the NRF network element, or the UDM network element in the embodiments.

In addition, this application further provides a computer-readable storage medium. The computer-readable storage medium stores computer instructions. When the computer instructions are run on a computer, an operation and/or processing performed by the corresponding network element in the method embodiments of this application are/is performed.

In addition, this application further provides a computer program product. The computer program product includes computer program code or instructions. When the computer program code or instructions are run on a computer, an operation and/or processing performed by the corresponding network element in the method embodiments of this application are/is performed.

In addition, this application further provides a chip. The chip includes a processor. A memory configured to store a computer program is disposed independently of the chip. The processor is configured to execute the computer program stored in the memory, so that the communication apparatus on which the chip is mounted performs an operation and/or processing performed by the corresponding network element in any one of the method embodiments.

Further, the chip may further include a communication interface. The communication interface may be an input/output interface, or may be an interface circuit, or the like. Further, the chip may further include the memory.

Optionally, there are one or more processors, there are one or more memories, and there are one or more memories.

In addition, this application further provides a communication apparatus (for example, may be a chip or a chip system), including a processor and a communication interface. The communication interface is configured to receive (or referred to as input) data and/or information, and transmit the received data and/or information to the processor. The processor processes the data and/or information. The communication interface is further configured to send (or referred to as output) the data and/or information processed by the processor, so that an operation and/or processing performed by the corresponding network element in any one of the method embodiments is performed.

In addition, this application further provides a communication apparatus, including at least one processor. The at least one processor is coupled to at least one memory, and the at least one processor is configured to execute a computer program or instructions stored in the at least one memory, so that the communication apparatus performs an operation and/or processing performed by the corresponding network element in any one of the method embodiments.

In addition, this application further provides a communication device, including a processor and a memory. Optionally, the communication device may further include a transceiver. The memory is configured to store a computer program. The processor is configured to invoke the computer program stored in the memory and run the computer program, and control the transceiver to send or receive a signal, so that the communication device performs an operation and/or processing performed by the corresponding network element in any one of the method embodiments.

This application further provides a communication system, including one or more of the NEF network element, the sensing network element, the AMF network element, the RAN network element, the NRF network element, or the UDM network element in embodiments of this application.

The memory in embodiments of this application may be a volatile memory or a nonvolatile memory, or may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) used as an external cache. By way of example but not limitation, many forms of RAMs are usable, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memory of the system and methods described in this specification aims to include but is not limited to these and any memory of another appropriate type.

The methods provided in the foregoing embodiments may be fully or partially implemented by software, hardware, firmware, or any combination thereof. When software is used to implement the embodiments, all or some of the embodiments may be implemented in a form of a computer program product. The computer program product may include one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media.

To clearly describe the technical solutions in embodiments of this application, numbers such as "first" and "second" are used in embodiments of this application to distinguish between same items or similar items that provide basically same functions or purposes. For example, the first sensing service request message and the second sensing service request message are merely used to distinguish between different sensing service request messages. A person skilled in the art may understand that the numbers such as "first" and "second" do not limit a quantity or an execution sequence, and the terms such as "first" and "second" do not indicate a definite difference.

In embodiments of this application, "at least one" means one or more, and "a plurality of" means two or more. The term "and/or" describes an association relationship between associated objects and may indicate three relationships. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division or may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for selecting a network element in a communication sensing service, comprising:
receiving, by a network exposure function network element, a first sensing service request message from an application function AF network element, wherein the first sensing service request message is used to request a first sensing service; and
sending, by the network exposure function network element, a second sensing service request message to a target first network element, wherein the second sensing service request message is used to request the first sensing service, and the target first network element supports the first sensing service.

2. The method according to claim 1, wherein before the sending, by the network exposure function network element, a second sensing service request message to a target first network element, the method further comprises:
selecting, by the network exposure function network element, the target first network element.

3. The method according to claim 2, wherein the selecting, by the network exposure function network element, the target first network element comprises:
sending, by the network exposure function network element, a network element discovery request message to a network repository function NRF network element, wherein the network element discovery request message is used to request to obtain a first network element that supports the first sensing service;
receiving, by the network exposure function network element, a response message of the network element discovery request message, wherein the response message indicates one or more first network elements that support the first sensing service; and
selecting, by the network exposure function network element, the target first network element from the one or more first network elements.

4. The method according to claim 3, wherein the network element discovery request message comprises network element type information and area information, the network element type information indicates a first network element type, and the area information indicates a sensing area; or
the network element discovery request message comprises network element type information and information about UE, and the network element type information indicates a first network element type.

5. The method according to claim 4, wherein the network element discovery request message further comprises one or more of the following:
sensing indication information, a sensing distance, the sensing area, a sensing speed range, a sensing distance resolution, sensing angle measurement precision, a sensing speed resolution, a sensing quality of service QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a radio access network RAN network element type, an access type, and a radio access technology RAT type;
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the RAN network element type, the access type, and the RAT type are determined based on the first sensing service request message; and
the sensing indication information indicates that a network element requested by the network element discovery request message is used to sense a service.

6. The method according to any one of claims 3 to 5, wherein the first network element is an access and mobility management function network element, and the target first network element is a target access and mobility management function network element; or
the first network element is a sensing function network element, and the target first network element is a target sensing function network element.

7. The method according to any one of claims 4 to 6, wherein the first network element is the sensing function network element, and the target first network element is the target sensing function network element;
the information about the UE is location information of the UE and/or an identifier of a serving AMF of the UE; and
the location information of the UE is obtained by the network exposure function network element from the first sensing service request message, or is obtained by the network exposure function network element from a gateway mobile location center GMLC network element, or is obtained by the network exposure function network element from the access and mobility management function network element.

8. The method according to claim 7, wherein the first network element is the sensing function network element, and the target first network element is the target sensing function network element; and
the second sensing service request message comprises the identifier of the serving access and mobility management function network element of the UE and/or the location information of the UE.

9. A method for selecting a network element in a communication sensing service, comprising:
receiving, by a sensing function network element, a first sensing service request message from a first network element, wherein the first sensing service request message is used to request a first sensing service;
selecting, by the sensing function network element, a target second network element that supports the first sensing service; and
sending, by the SF, a first sensing control request message to the target second network element, wherein the first sensing control request message is used to control the RAN network element to perform a sensing operation on the first sensing service.

10. The method according to claim 9, wherein the first network element is a network exposure function network element, an access and mobility management function network element, an application function AF network element, an application server AS, or a gateway sensing center.

11. The method according to claim 9 or 10, wherein the target second network element is the access and mobility management function network element or the RAN network element.

12. The method according to any one of claims 9 to 11, wherein the selecting, by the sensing function network element, a target second network element that supports the first sensing service comprises:
sending, by the sensing function network element, a network element discovery request message to a network repository function NRF network element, wherein the network element discovery request message is used to request to obtain a second network element that supports the first sensing service;
receiving, by the sensing function network element, a response message from the NRF network element, wherein the response message indicates one or more second network elements that support the first sensing service; and
selecting, by the sensing function network element, the target second network element from the one or more second network elements.

13. The method according to claim 12, wherein the network element discovery request message comprises network element type information and area information, the network element type information indicates a second network element type, and the area information indicates a sensing area; or
the network element discovery request message comprises network element type information and information about UE, and the network element type information indicates a second network element type.

14. The method according to claim 13, wherein the information about the UE comprises location information of the UE, and the location information of the UE is obtained by the sensing function network element from the first sensing service request message, or is obtained by the sensing function network element from the access and mobility management function network element, or is obtained by the sensing function network element from a gateway mobile location center GMLC network element.

15. The method according to claim 13 or 14, wherein the network element discovery request message further comprises one or more of the following information:
sensing indication information, a sensing distance, a sensing speed range, a sensing distance resolution, sensing angle measurement precision, a sensing speed resolution, a sensing quality of service QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a radio access network RAN network element type, an access type, and a radio access technology RAT type;
the sensing distance, the sensing area, the sensing speed range, the sensing distance resolution, the sensing angle measurement precision, the sensing speed resolution, the QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the RAN network element type, the access type, and the RAT type are determined based on the first sensing service request message; and
the sensing indication information indicates that a network element requested by the network element discovery request message is used to sense a service.

16. The method according to any one of claims 9 to 15, wherein the method further comprises:
sending, by the sensing function network element, a sensing capability registration request message to the network repository function NRF network element, wherein the sensing capability registration request message is used to request to register a sensing capability of the sensing function network element with the NRF network element.

17. The method according to claim 16, wherein the method further comprises:
receiving, by the sensing function network element, a sensing capability of one or more RAN network elements that is reported by the one or more RAN network elements; or receiving, by the sensing function network element, a sensing capability of one or more access and mobility management function network elements that is reported by the one or more access and mobility management function network elements; and
obtaining, by the sensing function network element, the sensing capability of the sensing function network element based on the sensing capability of the one or more RAN network elements or based on the sensing capability of the one or more access and mobility management function network elements.

18. The method according to claim 17, wherein the sensing capability registration request message comprises one or more of the following:
the sensing distance, the sensing area, the sensing speed range, the sensing distance resolution, the sensing angle measurement precision, the sensing speed resolution, the sensing quality of service QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the radio access network RAN network element type, the access type, and the radio access technology RAT type.

19. The method according to any one of claims 9 to 18, wherein the first sensing service request message is used to request the first sensing service for the UE, and the method further comprises:
sending, by the sensing function network element, a second request message to a unified data management UDM network element, wherein the second request message is used to request to obtain a serving AMF of the UE; and
receiving, by the sensing function network element, a response message from the UDM network element, wherein the response message comprises an identifier of the serving AMF of the UE.

20. A method for selecting a network element in a communication sensing service, comprising:
receiving, by an access and mobility management function network element, a first sensing service request message, wherein the first sensing service request message is used to request a first sensing service;
selecting, by the access and mobility management function network element, a first sensing function network element that supports the first sensing service; and
sending, by the access and mobility management function network element, a second sensing service request message to the first sensing function network element, wherein the second sensing service request message is used to request the first sensing service.

21. The method according to claim 20, wherein the selecting, by the access and mobility management function network element, a first sensing function network element that supports the first sensing service comprises:
sending, by the access and mobility management function network element, a sensing function network element discovery request message to a network repository function NRF network element, wherein the sensing function network element discovery request message is used to request to obtain a sensing function network element that supports the first sensing service;
receiving, by the access and mobility management function network element, a response message from the NRF network element, wherein the response message comprises one or more sensing function network elements that support the first sensing service; and
selecting, by the access and mobility management function network element, the first sensing function network element from the one or more sensing function network elements.

22. The method according to claim 21, wherein the sensing function network element discovery request message comprises network element type information and information about UE, and the network element type information indicates a third network element type; or
the sensing function network element discovery request message comprises network element type information and area information, the network element type information indicates a third network element type, and the area information indicates a sensing area.

23. The method according to claim 22, wherein the sensing function network element discovery request message further comprises one or more of the following information:
sensing indication information, a sensing distance, a sensing speed range, a sensing distance resolution, sensing angle measurement precision, a sensing speed resolution, a sensing quality of service QoS requirement, sensing object identification accuracy, a false alarm rate of sensing object identification, sensing data precision, a sensing data update frequency, a sensing dimension, a sensing feedback manner, a service type, a sensing requester type, a sensing requester identifier, a sensing application type, a sensing application identifier, a radio access network RAN network element type, an access type, and a radio access technology RAT type;
the sensing distance, the sensing area, the sensing speed range, the sensing distance resolution, the sensing angle measurement precision, the sensing speed resolution, the sensing quality of service QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the radio access network RAN network element type, the access type, and the radio access technology RAT type are determined based on the first sensing service request message; and
the sensing indication information indicates that a network element requested by the network element discovery request message is used to sense a service.

24. The method according to claim 23, wherein the information about the UE is an identifier of a serving access and mobility management function network element of the UE and/or location information of the UE; and
the location information of the UE is obtained by the access and mobility management function network element from the first sensing service request message or a location management function LMF network element.

25. The method according to any one of claims 20 to 24, wherein the method further comprises:
receiving, by the access and mobility management function network element, a first sensing control request message from the first sensing function network element, wherein the first sensing control request message is used to control a first RAN network element to perform a sensing operation on the first sensing service.

26. The method according to claim 25, wherein the method further comprises:
sending, by the access and mobility management function network element, a second sensing control request message to the first RAN network element, wherein the second sensing control request message is used to control the first RAN network element to perform the sensing operation on the first sensing service.

27. The method according to any one of claims 20 to 26, wherein the method further comprises:
sending, by the access and mobility management function network element, a sensing capability registration request message to the network repository function NRF network element, wherein the sensing capability registration request message is used to request to register a sensing capability of the access and mobility management function network element with the NRF network element.

28. The method according to claim 27, wherein the method further comprises:
receiving, by the access and mobility management function network element, a sensing capability of one or more RAN network elements that is reported by the one or more RAN network elements; and
obtaining, by the access and mobility management function network element, the sensing capability of the access and mobility management function network element based on the sensing capability of the one or more RAN network elements.

29. The method according to claim 27 or 28, wherein the sensing capability registration request message further comprises one or more of the following information:
the sensing distance, the sensing area, the sensing speed range, the sensing distance resolution, the sensing angle measurement precision, the sensing speed resolution, the sensing quality of service QoS requirement, the sensing object identification accuracy, the false alarm rate of the sensing object identification, the sensing data precision, the sensing data update frequency, the sensing dimension, the sensing feedback manner, the service type, the sensing requester type, the sensing requester identifier, the sensing application type, the sensing application identifier, the radio access network RAN network element type, the access type, and the radio access technology RAT type.

30. The method according to any one of claims 20 to 29, wherein the first sensing service request message is from a network exposure function network element, the UE, an AF, an AS, or a gateway sensing center.

31. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 30.
